# EUROPEAN PATENT APPLICATION

(11) **EP 4 757 370 A1**
(43) Date of publication of application: **10.06.2026**
(21) Application number: 24870384.5
(22) Date of filing: 05.09.2024
(51) Int. Cl.: H04W 12/06

(54) **INFORMATION SYNCHRONIZATION METHOD AND RELATED DEVICE**

(30) Priority: 28.09.2023 CN 202311282656
(71) Applicant: HUAWEI TECHNOLOGIES CO., LTD., Shenzhen 518129 (CN)
(72) Inventor: ZHANG, Qian, Shenzhen, Guangdong 518129 (CN); LIN, Yongbiao, Shenzhen, Guangdong 518129 (CN); ZHANG, Yule, Shenzhen, Guangdong 518129 (CN); SHU, Difei, Shenzhen, Guangdong 518129 (CN)
(74) Representative: Isarpatent
(86) International application number: PCT/CN2024/117068
(87) International publication number: WO 2025/066838

(57) **Abstract**

This application discloses an information synchronization method and a related device. In an embodiment, the information synchronization method includes: A first network device obtains identification information of a terminal device and identification information of a first access network device; the first network device determines a second network device based on the identification information of the first access network device, where the second network device is a local network device that provides, when a backhaul link is interrupted, a service for the terminal device that accesses the first access network device; and the first network device sends authentication subscription information, of the terminal device, to be synchronized to the second network device, where the authentication subscription information of the terminal device is used for authenticating, by the second network device, the terminal device that accesses the first access network device. Authentication subscription information of a part of terminal devices is synchronized to a local network device as required. This can not only reduce a storage capacity used by the local network device to store the authentication subscription information of the terminal device, but also reduce a risk of disclosure during synchronization of the authentication subscription information of the terminal device, and improve security of the authentication subscription information of the terminal device.

## Description

This application claims priority to Chinese Patent Application No. 202311282656.2, filed with the China National Intellectual Property Administration on September 28, 2023 and entitled "INFORMATION SYNCHRONIZATION METHOD AND RELATED DEVICE", which is incorporated herein by reference in its entirety.

### TECHNICAL FIELD

Embodiments of this application relate to the communication field, and in particular, to an information synchronization method and a related device.

### BACKGROUND

An isolated E-UTRAN operation for public safety (Isolated E-UTRAN Operation for Public Safety, IOPS) technology is a technology in which one access network device or a group of access network devices supporting IOPS maintain a specific level of communication capability for a terminal device (for example, a terminal device of a public safety user) after backhaul communication is lost. Specifically, in the IOPS technology, an independent service radio access network without backhaul communication is formed by deploying a local network device (for example, a local core network device and a local mission critical (mission critical, MC) system) near the access network device to replace a macro network device (for example, a macro core network device and a macro MC system) in a core equipment room, so that the radio access network provides a communication service like authentication for the public safety user via the local network device.

In a conventional technology, before backhaul communication is interrupted, a macro network device synchronizes authentication subscription information of all terminal devices to a local network device deployed near an access network device. When the backhaul communication is interrupted, the access network device starts an IOPS mode, and forwards, to the local network device, related information such as an authentication request of a terminal device that camps on the access network device, and the local network device provides, based on stored authentication subscription information of the terminal device, a communication service like authentication for the terminal device that camps on the access network device.

However, storing the authentication subscription information of all the terminal devices by the local network device has a high requirement on a storage capability of the local network device, may further increase a risk of disclosing the authentication subscription information of the terminal devices, and has low security.

### SUMMARY

This application provides an information synchronization method and a related device. Authentication subscription information of a part of terminal devices is synchronized to a local network device as required. This can not only reduce a storage capacity used by the local network device to store the authentication subscription information of the terminal device, but also reduce a risk of disclosure during synchronization of the authentication subscription information of the terminal device, and improve security of the authentication subscription information of the terminal device.

According to a first aspect, this application provides an information synchronization method. The information synchronization method may be performed by a first network device, or may be performed by a component (for example, a component like a processor, a chip, or a chip system) of a first network device. The first network device is used as an example. The first network device obtains identification information of a terminal device and identification information of a first access network device. Then, the first network device determines a second network device based on the identification information of the first access network device, where the second network device is a local network device that provides, when a backhaul link is interrupted, a service for the terminal device that accesses the first access network device. Then, the first network device sends authentication subscription information, of the terminal device, to be synchronized to the second network device, where the authentication subscription information of the terminal device is used for authenticating, by the second network device, the terminal device that accesses the first access network device.

It should be understood that the authentication subscription information of the terminal device includes the identification information of the terminal device, and the first network device may find, based on the received identification information of the terminal device, the authentication subscription information corresponding to the terminal device from authentication subscription information of a plurality of terminal devices.

In this application, the first network device can obtain the identification information of the terminal device and the identification information of the first access network device, determine the second network device (namely, the local network device that provides, when the backhaul link is interrupted, the service for the terminal device that accesses the first access network device) based on the identification information of the first access network device, and further send the authentication subscription information of the terminal device to the second network device, so that when the terminal device camps on the first access network device, the second network device can authenticate the terminal device based on the authentication subscription information of the terminal device, and further provide a communication service for the terminal device. The first network device synchronizes, to the second network device, only the authentication subscription information of the terminal device that may camp on the first access network device, instead of synchronizing authentication subscription information of all terminal devices. This helps save storage space of the local network device (namely, the second network device), and reduce a requirement on storage performance of the local network device. In addition, only authentication subscription information of a part of terminal devices is synchronized to the second network device, and authentication subscription information of another terminal device is still stored in the first network device. This helps reduce a risk of disclosing the authentication subscription information of the terminal device in a synchronization process, and improve security of storing the authentication subscription information of the terminal device.

In a possible implementation, the first network device stores a first correspondence, and the first correspondence indicates a correspondence between the first access network device and the second network device. That the first network device determines the second network device based on the identification information of the first access network device includes: The first network device determines, based on the identification information of the first access network device and the first correspondence, the second network device corresponding to the first access network device.

In this implementation, the first network device maintains a correspondence (for example, the first correspondence) between an access network device and a local network device, and therefore the first network device can accurately query, based on the identification information of the first access network device, the second network device corresponding to the first access network device. This further helps improve accuracy of synchronizing, by the first network device, the authentication subscription information of the terminal device to the second network device.

Specifically, the first network device can synchronize the authentication subscription information of the terminal device to the second network device in a direct or indirect manner.

In a possible implementation, the first network device directly sends the authentication subscription information of the terminal device to the second network device.

The first network device sends the authentication subscription information of the terminal device to the second network device if the first network device determines that a connection path between the first network device and the second network device is not interrupted.

For example, the first network device sends a first packet, where a destination address field of a packet header of the first packet carries address information of the second network device, and a payload field of the first packet carries the authentication subscription information of the terminal device.

In this implementation, the first network device encapsulates the address information of the second network device in the packet header, and encapsulates the authentication subscription information of the terminal device in a payload of the packet, so that after the first network device sends the packet, the packet can be transmitted to the second network device. The authentication subscription information of the terminal device is synchronized through the connection path between the first network device and the second network device. This helps ensure efficiency of synchronizing the authentication subscription information.

In another possible implementation, the first network device indirectly sends the authentication subscription information of the terminal device to the second network device, that is, the first network device forwards the authentication subscription information of the terminal device to the second network device via another device or network element.

If the first network device determines that a connection path between the first network device and the second network device is interrupted, the first network device determines a second access network device based on the identification information of the first access network device and a third network device corresponding to the second access network device, where the third network device is a local network device that provides, when the backhaul link is interrupted, a service for the terminal device that accesses the second access network device, there is a connection path between the first access network device and the second access network device, and there is a connection path between the first access network device and the second network device; and the first network device sends the authentication subscription information of the terminal device to the second network device via the third network device. The third network device is configured to forward the authentication subscription information of the terminal device to the second network device through the connection path between the first access network device and the second access network device.

In this implementation, although the connection path between the first network device and the second network device is interrupted, a connection path between the first network device and the third network device is not interrupted, and there is a connection between the first access network device corresponding to the second network device and the second access network device corresponding to the third network device. Therefore, the first network device sends the authentication subscription information of the terminal device to the third network device, and the third network device forwards the authentication subscription information of the terminal device to the second network device through the connection path between the first access network device and the second access network device. This helps improve reliability of synchronizing the authentication subscription information by the first network device to the second network device.

For example, the first network device sends a second packet, where a destination address field of a packet header of the second packet carries address information of the third network device, and a payload field of the second packet carries the authentication subscription information of the terminal device and address information of the second network device; and the address information of the second network device in the payload field is used by the third network device to generate a third packet to be sent to the second network device, where a destination address field of a packet header of the third packet carries the address information of the second network device, and a payload field of the third packet carries the authentication subscription information of the terminal device.

In this implementation, a payload of the second packet carries the address information of the second network device and the authentication subscription information of the terminal device, to indicate that a final receiver of the authentication subscription information of the terminal device is the second network device instead of another network device. This helps a network device (for example, the third network device) that receives the second packet forward the authentication subscription information of the terminal device to the second network device.

In a possible implementation, the first network device stores a second correspondence, and the second correspondence indicates a correspondence between the first access network device and the second access network device; and the first network device stores a third correspondence, and the third correspondence indicates a correspondence between the second access network device and the third network device. That the first network device determines the second access network device based on the identification information of the first access network device and the third network device corresponding to the second access network device includes: The first network device determines the second access network device based on the identification information of the first access network device and the second correspondence; and the first access network device determines, based on identification information of the second access network device and the third correspondence, the third network device corresponding to the second access network device.

In this implementation, it is proposed that the first network device not only maintains a correspondence (for example, the first correspondence and the third correspondence) between an access network device and a local network device, but also maintains a correspondence (for example, the second correspondence) between an access network device and an adjacent access network device (or a connected access network device), so that the first network device searches, based on the identification information of the first access network device and the second correspondence, for the second access network device connected to the first access network device, and then searches, based on the identification information of the second access network device and the third correspondence, for the third network device deployed near the second access network device. The foregoing correspondences are maintained. This helps the first network device search for a path for forwarding the authentication subscription information of the terminal device, and improve efficiency of synchronizing, by the first network device, the authentication subscription information of the terminal device.

In a possible implementation, the first network device stores identification information of a third access network device and address information of a fourth network device, the third access network device is an access network device that the terminal device has historically accessed, the fourth network device is a local network device that provides, when the backhaul link is interrupted, a service for the terminal device that accesses the third access network device, and the fourth network device stores the authentication subscription information of the terminal device. The method further includes: The first network device sends first indication information to the fourth network device when the identification information of the first access network device is different from the identification information of the third access network device, where the first indication information indicates to delete the authentication subscription information of the terminal device.

In this implementation, it is proposed that if a local network device corresponding to the access network device (namely, the fourth network device corresponding to the third access network device) that the terminal device has historically accessed stores the authentication subscription information of the terminal device, the first network device stores the identification information of the third access network device and the address information of the fourth network device. When the first network device receives the identification information of the terminal device and the identification information of the first access network device, it indicates that the terminal device has left the second access network device. Therefore, to ensure security of the authentication subscription information of the terminal device, the first network device indicates, by using the first indication information, the fourth network device to delete the authentication subscription information of the terminal device stored in the fourth network device.

In a possible implementation, after the first network device sends the authentication subscription information, of the terminal device, to be synchronized to the second network device, the method further includes: The first network device obtains the identification information of the terminal device and identification information of a fourth access network device, where the fourth access network device is different from the first access network device; and the first network device sends the first indication information to the second network device, where the first indication information indicates to delete the authentication subscription information of the terminal device.

In this implementation, when the first network device receives the identification information of the terminal device and the identification information of the fourth access network device (different from the identification information of the first access network device), it indicates that the terminal device has left the first access network device. Therefore, to ensure security of the authentication subscription information of the terminal device, the first network device indicates, by using the first indication information, the second network device to delete the authentication subscription information of the terminal device stored in the second network device.

In a possible implementation, the second network device is a local core network device, and the authentication subscription information of the terminal device includes authentication subscription information used by the terminal device in the local core network device; and/or the second network device is a local MC system, and the authentication subscription information of the terminal device includes authentication subscription information used by the terminal device in the local MC system.

In a possible implementation, the first network device is a business & operation support system BOSS. The authentication subscription information of the terminal device in the first network device is generated by the first network device or is manually configured. In addition, the first network device receives the identification information of the terminal device and the identification information of the first access network device that are manually configured.

In a possible implementation, the first network device is a network device that provides, when the backhaul link is not interrupted, a service for the terminal device that accesses the first access network device. For example, the first network device is a macro core network device, and/or the first network device is a macro MC system.

The first network device obtains the authentication subscription information of the terminal device from a business & operation support system (business & operation support system, BOSS). In addition, the first network device receives the identification information of the terminal device and the identification information of the first access network device from the terminal device via the first access network device.

According to a second aspect, this application provides an information synchronization method. The information synchronization method may be performed by a terminal device, or may be performed by a component (for example, a component like a processor, a chip, or a chip system) of a terminal device. The terminal device is used as an example. The terminal device sends identification information of the terminal device and identification information of a first access network device to a first network device via the first access network device, where the identification information of the terminal device and the identification information of the first access network device are used by the first network device to determine a second network device based on the identification information of the first access network device and synchronize authentication subscription information of the terminal device to the second network device, where the second network device is a local network device that provides, when a backhaul link is interrupted, a service for the terminal device that accesses the first access network device; the terminal device receives second indication information from the first access network device, where the second indication information indicates that the backhaul link of the first access network device is interrupted; and the terminal device is authenticated by the second network device, and obtains a communication service.

In this implementation, the terminal device can report the identification information of the terminal device and the identification information of the first access network device to the first network device, so that the first network device synchronizes the authentication subscription information of the terminal device to the second network device, and then the terminal device can trigger authentication in the second network device after receiving the second indication information. Because the terminal device reports the identification information of the terminal device and the identification information of the first access network device to the first network device, only the first network device is triggered to synchronize the authentication subscription information of the terminal device to the second network device, instead of synchronizing authentication subscription information of all terminal devices, so that the authentication subscription information of the terminal device is synchronized as required. This not only helps save storage space of a local network device (namely, the second network device) and reduce a requirement on storage performance of the local network device, but also helps reduce a risk of disclosing the authentication subscription information of the terminal device in a synchronization process, and improve security of storing the authentication subscription information of the terminal device.

In a possible implementation, the terminal device is a terminal device that has been authenticated in the first network device. For example, when the terminal device accesses the first access network device, the terminal device applies for authentication in the first network device, so that the terminal device can report the identification information of the terminal device and the identification information of the first access network device to the first network device via the first access network device.

In a possible implementation, before the terminal device sends the identification information of the terminal device and the identification information of the first access network device to the first network device via the first access network device, the method further includes: The terminal device receives a system broadcast message of the first access network device, where the system broadcast message includes the identification information of the first access network device.

It should be noted that specific implementations and beneficial effect of this aspect are similar to a part of implementations of the first aspect. For details, refer to the specific implementations and beneficial effect of the first aspect. Details are not described herein.

According to a third aspect, this application provides an information synchronization method. The information synchronization method may be performed by a second network device, or may be performed by a component (for example, a component like a processor, a chip, or a chip system) of a second network device. The second network device is used as an example. The second network device receives authentication subscription information of a terminal device, where the terminal device is a terminal device that has accessed or is to access a first access network device, and the second network device is a local network device that provides, when a backhaul link is interrupted, a service for the terminal device that accesses the first access network device; and the second network device authenticates, based on the authentication subscription information of the terminal device, the terminal device that applies for authentication.

In this embodiment, the second network device receives only the authentication subscription information of the terminal device that has accessed or is to access the first access network device, and does not receive authentication subscription information of a terminal device that accesses another access network device. Therefore, this not only helps save storage space of a local network device (namely, the second network device) and reduce a requirement on storage performance of the local network device, but also helps reduce a risk of disclosing the authentication subscription information of the terminal device in a synchronization process, and improve security of storing the authentication subscription information of the terminal device.

In a possible implementation, that the second network device receives the authentication subscription information of the terminal device includes: The second network device receives the authentication subscription information of the terminal device from a first network device, where the first network device is a network device that provides, when the backhaul link is not interrupted, a service for the terminal device that accesses the first access network device.

In a possible implementation, that the second network device receives the authentication subscription information of the terminal device includes: The second network device receives a first packet from the first network device, where a destination address field of a packet header of the first packet carries address information of the second network device, and a payload field of the first packet carries the authentication subscription information of the terminal device.

In a possible implementation, that the second network device receives the authentication subscription information of the terminal device includes: The second network device receives, from a third network device through a connection path between the first access network device and a second access network device, the authentication subscription information of the terminal device sent by a first network device, where the first network device is a network device that provides, when the backhaul link is not interrupted, a service for the terminal device that accesses the first access network device, and the third network device is a local network device that provides, when the backhaul link is interrupted, a service for the terminal device that accesses the second access network device.

In a possible implementation, that the second network device receives the authentication subscription information of the terminal device includes: The second network device receives a third packet from a third network device, where a destination address field of a packet header of the third packet carries address information of the second network device, and a payload field of the third packet carries the authentication subscription information of the terminal device.

In a possible implementation, the method further includes: The second network device receives first indication information, where the first indication information indicates to delete the authentication subscription information of the terminal device; and the second network device deletes the authentication subscription information of the terminal device.

In a possible implementation, the second network device is a local core network device deployed near the first access network device, and/or the second network device is a local MC system deployed near the first access network device.

It should be noted that specific implementations and beneficial effect of this aspect are similar to a part of implementations of the first aspect. For details, refer to the specific implementations and beneficial effect of the first aspect. Details are not described herein.

According to a fourth aspect, an embodiment of this application provides a communication device. The communication device may be the core network device in the foregoing implementations, or may be a chip in the core network device. The core network device may be a macro core network device deployed in a core network equipment room, for example, a first network device. The core network device may alternatively be a local core network device deployed near an access network device, for example, a second network device, a third network device, and a fourth network device. The communication device may include a processing module and a transceiver module. When the communication device is the core network device, the processing module may be a processor, and the transceiver module may be a transceiver. The core network device may further include a storage module, and the storage module may be a memory. The storage module is configured to store instructions, and the processing module executes the instructions stored in the storage module, so that the macro core network device (for example, the first network device) performs the method according to any one of the first aspect or the implementations of the first aspect, or so that the local core network device (for example, the second network device) performs the method according to any one of the third aspect or the implementations of the third aspect. When the communication device is the chip in the core network device, the processing module may be a processor, and the transceiver module may be an input/output interface, a pin, a circuit, or the like. The processing module executes instructions stored in a storage module, so that the macro core network device (for example, the first network device) performs the method according to any one of the first aspect or the implementations of the first aspect, or so that the local core network device (for example, the second network device) performs the method according to any one of the third aspect or the implementations of the third aspect. The storage module may be a storage module (for example, a register or a cache) in the chip, or may be a storage module (for example, a read-only memory or a random-access memory) that is in the core network device and that is located outside the chip.

According to a fifth aspect, an embodiment of this application provides a communication device. The communication device may be the terminal device in the foregoing implementations, or may be a chip in the terminal device. The communication device may include a processing module and a transceiver module. When the communication device is the terminal device, the processing module may be a processor, and the transceiver module may be a transceiver. The terminal device may further include a storage module, and the storage module may be a memory. The storage module is configured to store instructions, and the processing module executes the instructions stored in the storage module, so that the terminal device performs the method according to any one of the second aspect or the implementations of the second aspect. When the communication device is the chip in the terminal device, the processing module may be a processor, and the transceiver module may be an input/output interface, a pin, a circuit, or the like. The processing module executes instructions stored in a storage module, so that the terminal device performs the method according to the second aspect or any one of the implementations of the second aspect. The storage module may be a storage module (for example, a register or a cache) in the chip, or may be a storage module (for example, a read-only memory or a random-access memory) that is in the terminal device and that is located outside the chip.

According to a sixth aspect, an embodiment of this application provides a communication device. The communication device may be the MC system (also referred to as an MC device) in the foregoing implementations, or may be a chip in the MC system. The MC system may be a macro MC system deployed in a core network equipment room, for example, a first network device. The MC system may alternatively be a local MC system deployed near an access network device, for example, a second network device, a third network device, and a fourth network device. The communication device may include a processing module and a transceiver module. When the communication device is the MC system, the processing module may be a processor, and the transceiver module may be a transceiver. The MC system may further include a storage module, and the storage module may be a memory. The storage module is configured to store instructions, and the processing module executes the instructions stored in the storage module, so that the macro MC system (for example, the first network device) performs the method according to any one of the first aspect or the implementations of the first aspect, or so that the local MC system (for example, the second network device) performs the method according to any one of the third aspect or the implementations of the third aspect. When the communication device is the chip in the MC system, the processing module may be a processor, and the transceiver module may be an input/output interface, a pin, a circuit, or the like. The processing module executes instructions stored in a storage module, so that the macro MC system (for example, the first network device) performs the method according to any one of the first aspect or the implementations of the first aspect, or so that the local MC system (for example, the second network device) performs the method according to any one of the third aspect or the implementations of the third aspect. The storage module may be a storage module (for example, a register or a cache) in the chip, or may be a storage module (for example, a read-only memory or a random-access memory) that is in the MC system and that is located outside the chip.

According to a seventh aspect, an embodiment of this application provides a server. The server may be the BOSS (namely, an implementation of the first network device) in the foregoing implementations, or may be a chip in the BOSS. The server may include a processing module and a transceiver module. When the server is the BOSS, the processing module may be a processor, and the transceiver module may be a transceiver. The BOSS may further include a storage module, and the storage module may be a memory. The storage module is configured to store instructions, and the processing module executes the instructions stored in the storage module, so that the BOSS performs the method according to any one of the third aspect or the implementations of the third aspect. When the server is the chip in the BOSS, the processing module may be a processor, and the transceiver module may be an input/output interface, a pin, a circuit, or the like. The processing module executes instructions stored in a storage module, so that the BOSS performs the method according to any one of the third aspect or the implementations of the third aspect. The storage module may be a storage module (for example, a register or a cache) in the chip, or may be a storage module (for example, a read-only memory or a random-access memory) that is in the BOSS and that is located outside the chip.

According to an eighth aspect, this application provides a communication device. The apparatus may be an integrated circuit chip. The integrated circuit chip includes a processor. The processor is coupled to a memory. The memory is configured to store a program or instructions. When the program or the instructions are executed by the processor, the communication device is enabled to perform the method according to any implementation of the foregoing aspects.

According to a ninth aspect, an embodiment of this application provides a computer program product including instructions. When the computer program product runs on a computer, the computer is enabled to perform the method according to any implementation of the foregoing aspects.

According to a tenth aspect, an embodiment of this application provides a computer-readable storage medium including instructions. When the instructions are run on a computer, the computer is enabled to perform the method according to any implementation of the foregoing aspects.

According to an eleventh aspect, an embodiment of this application provides a communication system. The communication system includes the first network device that performs any one of the first aspect and the implementations of the first aspect, the terminal device that performs any one of the second aspect and the implementations of the second aspect, and the second network device that performs any one of the third aspect and the implementations of the third aspect.

### BRIEF DESCRIPTION OF DRAWINGS

FIG. 1 is a diagram of a network architecture of a communication system in an IOPS scenario;
FIG. 2 is a flowchart of an information synchronization method according to this application;
FIG. 3A and FIG. 3B are another flowchart of an information synchronization method according to this application;
FIG. 4A is a diagram of an example of an application scenario of an information synchronization method according to this application;
FIG. 4B is a diagram of another example of an application scenario of an information synchronization method according to this application;
FIG. 5A and FIG. 5B are another flowchart of an information synchronization method according to this application;
FIG. 6A to FIG. 6C are another flowchart of an information synchronization method according to this application;
FIG. 7A is a diagram of another example of an application scenario of an information synchronization method according to this application;
FIG. 7B is a diagram of another example of an application scenario of an information synchronization method according to this application;
FIG. 8A to FIG. 8C are another flowchart of an information synchronization method according to this application;
FIG. 9 is a diagram of an embodiment of a communication device according to this application;
FIG. 10 is a diagram of another embodiment of a communication device according to this application;
FIG. 11 is a diagram of an embodiment of a server according to this application; and
FIG. 12 is a diagram of an embodiment of a device according to this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In the specification, claims, and accompanying drawings of this application, the terms "first", "second", "third", "fourth", and so on (if existent) are intended to distinguish between similar objects but do not necessarily indicate a specific order or sequence. It should be understood that the terminology termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

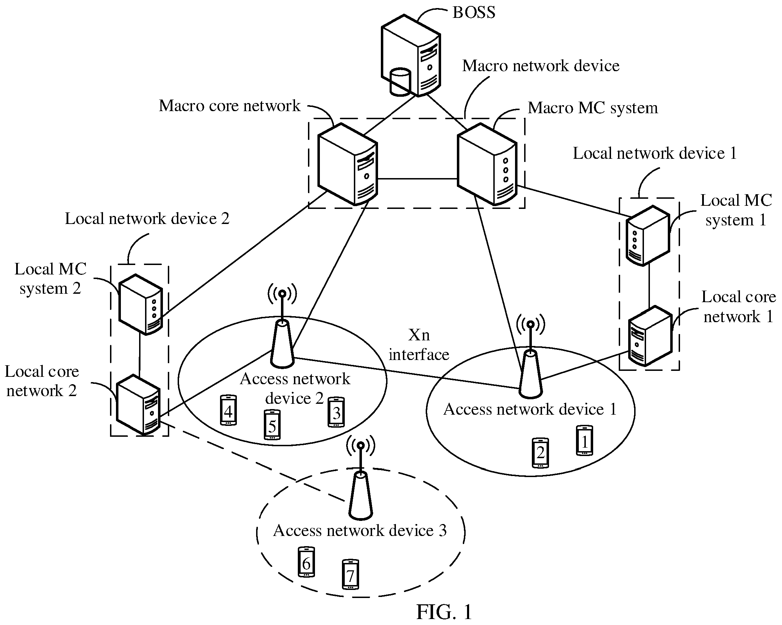

An information synchronization method provided in this application may be applied to a scenario in which backhaul communication may be interrupted, and is used to synchronize, before backhaul communication is interrupted, authentication subscription information of a terminal device to a local network device corresponding to an access network device that the terminal device may access, so that after backhaul communication is interrupted, the terminal device can still be authenticated in the local network device to obtain a communication service. As shown in FIG. 1, a communication system in this scenario mainly includes the following network elements.

A terminal device is a device that provides voice and/or data connectivity for a user in the communication system. The terminal device may communicate with a core network (for example, a 4G core network (namely, an evolved packet core (evolved packet core, EPC)) or a 5G core (5th generation core, 5GC)) over a radio access network (radio access network, RAN), and may exchange voice and/or data with the RAN. Examples of the terminal device in some scenarios are a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile station (mobile), a remote station (remote station), an access point (access point, AP), a remote terminal (remote terminal) device, an access terminal (access terminal) device, and the like. A specific implementation form of the terminal device is not limited in this application. In addition to a function of a conventional terminal device, the terminal device provided in this application is further installed with an MC client and can apply for authentication in an MC system. In addition, the terminal device can also switch between a macro network mode and an IOPS mode based on indication information of an access network device. For example, if the terminal device receives, in a process of accessing the access network device, an indication indicating that backhaul communication is interrupted, the terminal device switches from the macro network mode to the IOPS mode; or if the terminal device does not receive, in a process of accessing the access network device, an indication indicating that backhaul communication is interrupted, the terminal device uses the macro network mode by default.

An access network device may be any device with a wireless transceiver function, and may be configured to be responsible for a function related to an air interface, for example, a radio link maintenance function, a radio resource management function, and a part of mobility management functions. The access network device may be further configured with a baseband unit (baseband unit, BBU), and has a baseband signal processing function. There is a communication interface (for example, an Xn interface or an X2 interface) between adjacent access network devices. For example, access network devices (for example, an access network device 1, an access network device 2, and an access network device 3 shown in FIG. 1) may be access network devices (radio access networks, RANs) that currently provide a service for the terminal device. Currently, some common examples of the access network device are a NodeB (NodeB, NB), an evolved NodeB (evolved NodeB, eNB or eNodeB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like. In addition, in a cloud radio access network (cloud radio access network, CloudRAN), an open radio access network (open radio access network, ORAN), or another network structure, the access network device may be a device including a central unit (central unit, CU) (also referred to as a control unit) and/or a distributed unit (distributed unit, DU). A specific implementation form of the access network device is not limited in this application. In addition to a function of a conventional access network device, the access network device provided in this application further has a function of detecting a status of a backhaul network, and switches between a macro network mode and an IOPS mode based on whether the backhaul network is faulty. For example, when the backhaul network is faulty (for example, backhaul communication is interrupted), the access network device switches from the macro network mode to the IOPS mode; or when a backhaul network fault is removed, the access network device switches from the IOPS mode to the macro network mode.

A core network device is a device in a core network (core network, CN) that provides service support for a terminal device. For example, the core network device is a 4G core network (namely, an evolved packet core (evolved packet core, EPC)) or a 5G core (5th generation core, 5GC). The EPC is used as an example. The core network device in this application mainly includes network elements such as a mobility management entity (mobility management entity, MME), a home subscriber server (home subscriber server, HSS), a PDN packet data gateway (PDN GateWay, P-GW), and a serving gateway (Serving GateWay, S-GW). The 5GC is used as an example. The core network device in this application mainly includes an access and mobility management function (access and mobility management function, AMF) entity, an authentication server function (authentication server function, AUSF) entity, a session management function (session management function, SMF) entity, a user plane function (user plane function, UPF) entity, and the like. The AMF entity may be responsible for access management and mobility management of the terminal device. The SMF entity may be responsible for session management, for example, user session establishment. The UPF entity may be a functional entity on a user plane, and is mainly responsible for connecting to an external network.

It should be noted that the core network device in this application is classified into a macro core network device (for example, a macro core network shown in FIG. 1) and a local core network device (for example, a local core network 1 and a local core network 2 shown in FIG. 1). The macro core network device is a core network device used by a macro network deployed in a core equipment room. When backhaul communication is not interrupted, the macro core network device provides a service like authentication for a terminal device. The macro core network device may be an LTE core network device, or may be a 5G core network device. For example, the core network device shown in FIG. 1 may be a macro EPC or a macro 5GC. In addition, the local core network device is a miniaturized core network device deployed near an access network device and used in an IOPS mode. When backhaul communication is interrupted, the local core network device replaces the macro core network device to provide the service like authentication for the terminal device. The local core network device may be an LTE core network device, or may be a 5G core network device. For example, the local core network 1 and/or the local core network 2 shown in FIG. 1 may be a local EPC or a local 5GC. In addition, the local core network device may be connected to at least one access network device, that is, the local core network device may provide a service for the at least one access network device. For example, the local core network 2 shown in FIG. 1 is connected to both the access network device 2 and the access network device 3.

A mission critical (mission critical, MC) system is a system that has extremely strict requirements on real-time performance, security, and reliability and is closely related to common security, for example, a system in a life-related scenario such as disaster relief, emergency medical treatment, rail transit, smart grid, industrial automation, automotive electronics, and medical instruments, and another system that needs to have a series of capabilities such as functional safety, information security, fault isolation and recovery, reliability, and real-time performance. The MC system includes at least function entities such as a configuration management service (configuration management service) entity, a group management service (group management service) entity, and an identity management service (identity management service) entity. The configuration management service entity is configured to: configure nongroup management MC service-related information for one or more mission critical (Mission Critical, MC) service applications, configure data on a configuration management client, and manage MC service configurations supported by an MC service provider. The group management service entity is configured to: provide management of a group supported by an MC service provider, and manage media policy information used by a terminal device for media processing. The identity management service entity is configured to authenticate an MC ID, and can perform identity authentication by verifying a credential provided by a user.

It should be noted that the MC system in this application is classified into a macro MC system (macro MC system) and a local MC system (local MC system). The macro MC system is a server or device deployed in the core equipment room and configured to provide an MC service. The macro MC system is connected to the macro core network device, and is responsible for providing an MC service for a user (for example, the terminal device that accesses the access network device). In addition, the local MC system is a server or device deployed near the access network device and configured to provide an MC service. The local MC system is connected to the local core network device, and the local core network device is connected to the access network device. In an IOPS mode, the local MC system provides the MC service for the user (for example, the terminal device that accesses the access network device). For example, a local MC system 1 and the local core network 1 in FIG. 1 are deployed near the access network device 1, and are configured to provide an MC service for a terminal device (for example, a terminal device 1 or a terminal device 2) that accesses the access network device 1. In addition, when the local core network device is connected to a plurality of access network devices, the MC system connected to the core network device may provide the MC service for terminal devices that access the plurality of access network devices. For example, a local MC system 2 and the local core network 2 in FIG. 1 are deployed near the access network device 2 and the access network device 3. In other words, the local core network 2 connected to the local MC system 2 is connected to both the access network device 2 and the access network device 3. The local MC system 2 is configured to provide an MC service for a terminal device (for example, a terminal device 3, a terminal device 4, or a terminal device 5) that accesses the access network device 2 and a terminal device (for example, a terminal device 6 or a terminal device 7) that accesses the access network device 3.

It should be understood that a local core network device and a local MC system that correspond to a same access network device may be co-deployed as one device. For example, the local MC system 2 and the local core network 2 shown in FIG. 1 may be co-deployed as one device, and the local MC system 1 and the local core network 1 shown in FIG. 1 may be co-deployed as one device. In addition, the local network device, the local MC system, and the access network device may be co-deployed as one device. For example, the local MC system 1, the local core network 1, and the access network device 1 shown in FIG. 1 may be co-deployed as one device. This is not limited in this application.

A business & operation support system (business & operation support system, BOSS) is an integrated service operation and management platform that integrates a business support system (business support system, BSS) and an operation support system (operation support system, OSS). In this application, the BOSS is configured to deliver, to an MC system (a macro MC system and/or a local MC system) and a core network device (a macro core network device and/or a local core network device), authentication subscription information of a terminal device that is registered with the BOSS, so that the MC system and the core network device can authenticate, based on the authentication subscription information of the terminal device, the terminal device that applies for authentication.

In a conventional technology, before backhaul communication is interrupted, a BOSS synchronizes authentication subscription information of all registered terminal devices to a macro network device (namely, a macro core network device and a macro MC system), and then the macro network device (namely, the macro core network device and the macro MC system) synchronizes the authentication subscription information of all the terminal devices to a local network device (namely, a local core network device and a local MC system) deployed near each access network device. FIG. 1 is used as an example. If the seven terminal devices (namely, the terminal device 1 to the terminal device 7) in FIG. 1 are all registered with the BOSS, the BOSS can generate authentication subscription information of each of the seven terminal devices, and synchronize the authentication subscription information of each terminal device to all deployed local network devices (namely, the local core network devices and the local MC systems). The authentication subscription information of each terminal device includes authentication subscription information (referred to as core network authentication subscription information for short) used by the terminal device during authentication registration in the core network device and authentication subscription information (referred to as MC system authentication subscription information for short) used by the terminal device during authentication registration in the MC system. The BOSS synchronizes core network authentication subscription information of the seven terminal devices to the local core network 1 and the local core network 2, and synchronizes MC system authentication subscription information of the seven terminal devices to the local MC system 1 and the local MC system 2.

However, a manner in which the local network device (the local core network device and/or the local MC system) stores the authentication subscription information of all the terminal devices has a high requirement on a storage capability of the local network device. As a user scale increases, authentication subscription information that needs to be stored may exceed a storage upper limit of the local network device. In addition, a network security level of the local network device is limited. This may increase a risk of disclosing the authentication subscription information of the terminal device in this process, and reduce security.

In view of this, this application provides an information synchronization method and a related device. Authentication subscription information of a part of terminal devices is synchronized to a local network device as required. This can not only reduce a storage capacity used by the local network device to store the authentication subscription information of the terminal device, but also reduce a risk of disclosure during synchronization of the authentication subscription information of the terminal device, and improve security of the authentication subscription information of the terminal device.

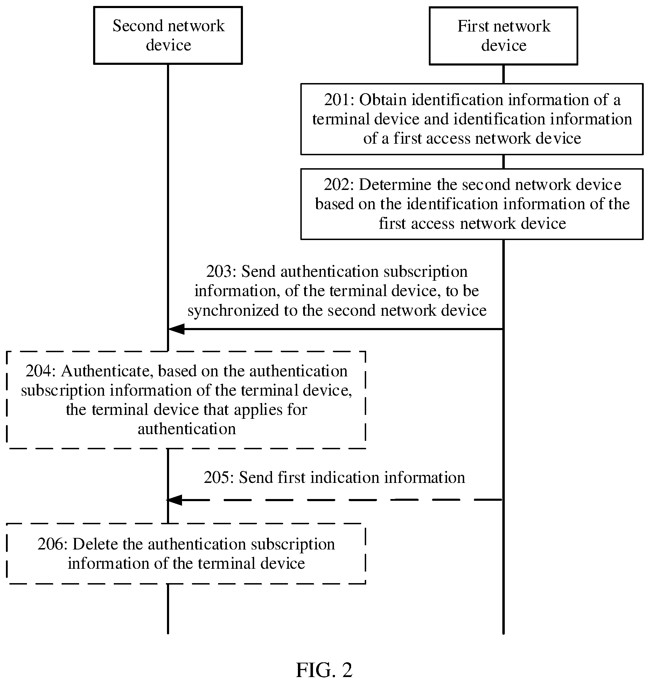

The following describes a main procedure of the information synchronization method provided in this application with reference to FIG. 2. As shown in FIG. 2, network elements related to the information synchronization method mainly perform the following steps.

Step 201: A first network device obtains identification information of a terminal device and identification information of a first access network device.

The identification information of the terminal device and the identification information of the first access network device indicate that the terminal device has camped on the first access network device, or indicate that the terminal device may camp on or access the first access network device in the future.

In addition, the first network device may be a macro network device (for example, the macro core network device and/or the macro MC system shown in FIG. 1), or may be a business & operation support system BOSS. It should be understood that when implementations of the first network device are different, manners in which the first network device obtains the identification information of the terminal device and the identification information of the first access network device are different. The following separately provides descriptions.

In a possible implementation, the first network device is the macro network device that provides, when a backhaul link is not interrupted, a service for the terminal device that accesses the first access network device, and the first network device receives the identification information of the terminal device and the identification information of the first access network device from the terminal device via the first access network device. In this implementation, the identification information of the terminal device and the identification information of the first access network device indicate that the terminal device has camped on the first access network device.

For example, when the terminal device camps on the first access network device, the terminal device receives a system broadcast message of the first access network device, where the system broadcast message includes the identification information of the first access network device. The terminal device parses the system broadcast message to obtain the identification information of the first access network device. Then, the terminal device sends the identification information of the terminal device and the identification information of the first access network device to the first access network device, and the first access network device forwards the identification information of the terminal device and the identification information of the first access network device to the first network device.

Optionally, the identification information of the terminal device and the identification information of the first access network device may be carried in one message for sending. For example, the terminal device sends a message 1 to the first access network device, where the message 1 includes the identification information of the terminal device and the identification information of the first access network device. The message 1 indicates that the terminal device camps on a cell of the first access network device. After the first access network device receives the message 1, the first access network device forwards the message 1 to the first network device. Optionally, the message 1 may be understood as an information synchronization request, and is used to trigger the first network device to synchronize authentication subscription information of the terminal device to a local network device deployed near the first access network device.

Optionally, the terminal device is a terminal device that has been authenticated in the first network device. For example, after the terminal device camps on the first access network device, the terminal device sends an authentication request to the first network device via the first access network device, and responds to authentication performed by the first network device. Only after the terminal device is authenticated by the first network device, the first access network device can forward, to the first network device, the identification information of the terminal device and the identification information of the first access network device that are sent by the terminal device.

In another possible implementation, the first network device is the business & operation support system BOSS, and the first network device receives the identification information of the terminal device and the identification information of the first access network device that are manually configured. It may also be understood that the first network device receives a correspondence between the identification information of the terminal device and the identification information of the first access network device that are manually configured. In this implementation, the identification information of the terminal device and the identification information of the first access network device indicate that the terminal device may camp on or access the first access network device in the future, or indicate that backhaul communication of the first access network device accessed by the terminal device is interrupted.

In addition, before performing step 201, the first network device further obtains authentication subscription information of the terminal device. The authentication subscription information of the terminal device is used for authenticating, by the macro network device or the local network device, the terminal device. For example, when the macro network device stores the authentication subscription information of the terminal device, and backhaul communication of the access network device accessed by the terminal device is not interrupted, the macro network device provides, based on the authentication subscription information of the terminal device, a service such as authentication for the terminal device. When the local network device stores the authentication subscription information of the terminal device, and backhaul communication of the access network device accessed by the terminal device is interrupted, the local network device provides, based on the authentication subscription information of the terminal device, a service such as authentication for the terminal device.

The authentication subscription information of the terminal device includes authentication subscription information (referred to as core network authentication subscription information for short) used by the terminal device during authentication in the core network device and authentication subscription information (referred to as MC system authentication subscription information for short) used by the terminal device during authentication in the MC system. If the first network device is the macro core network device, the first network device obtains at least the core network authentication subscription information. If the first network device is the macro MC system, the first network device obtains at least the MC system authentication subscription information. If the first network device is the BOSS, the first network device may obtain both the core network authentication subscription information and the MC system authentication subscription information.

Optionally, the authentication subscription information of the terminal device includes the identification information of the terminal device. For example, the core network authentication subscription information includes the identification information of the terminal device, to indicate that the core network authentication subscription information is used for authenticating, by the core network device, which terminal device. For example, the MC system authentication subscription information includes the identification information of the terminal device, to indicate that the MC system authentication subscription information is used for authenticating, by the MC system, which terminal device. Optionally, for the same terminal device, the identification information of the terminal device included in the core network authentication subscription information and the identification information of the terminal device included in the MC system authentication subscription information are identification information of different types. For example, the identification information of the terminal device included in the core network authentication subscription information may be an international mobile subscriber identity (international mobile subscriber identity, IMSI), and may uniquely identify the terminal device. The identification information of the terminal device included in the MC system authentication subscription information is identification information of a different type, and may be a mission critical user identity (Mission Critical user identity, MC ID) that can uniquely identify an MC client (MC client) and further uniquely identify the terminal device on which the MC client is installed.

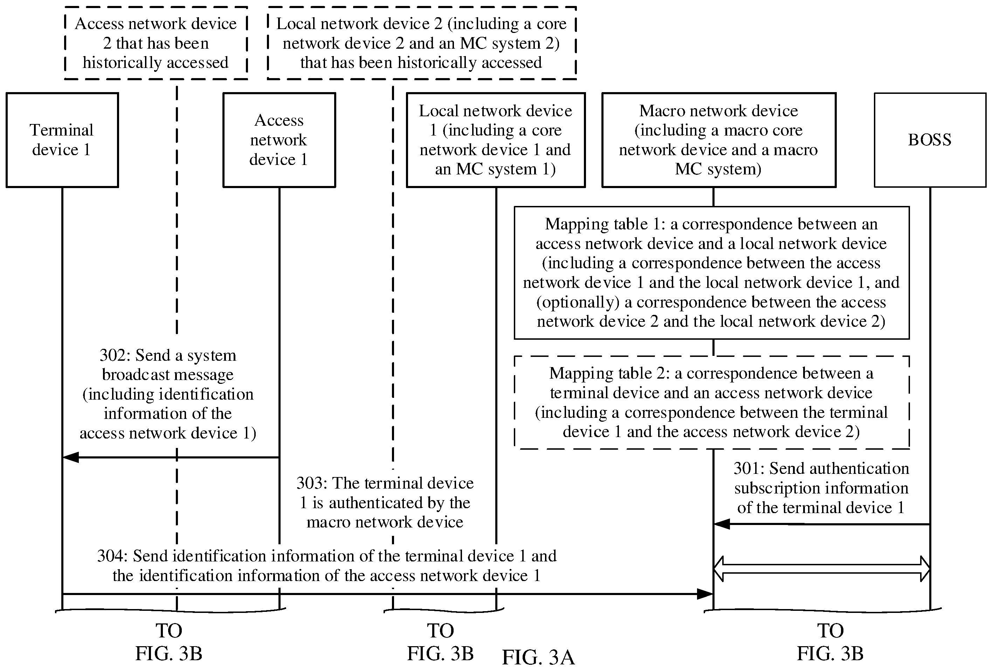

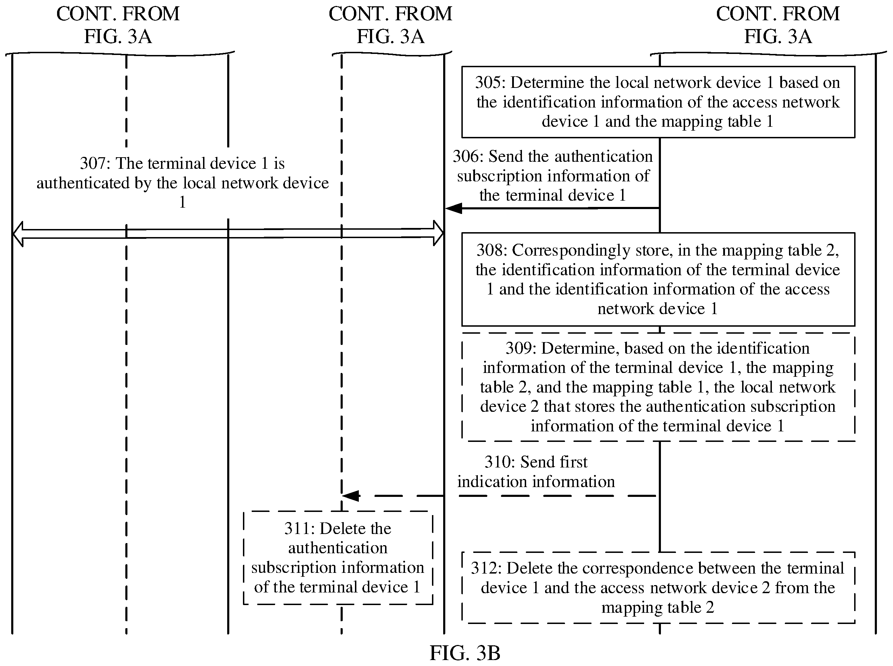

It should be understood that the core network authentication subscription information and the MC system authentication subscription information are different information. For further descriptions of the authentication subscription information of the terminal device, refer to related descriptions in step 301 in an embodiment corresponding to FIG. 3A and FIG. 3B. Details are not described herein.

It should be understood that when implementations of the first network device are different, manners in which the first network device obtains the authentication subscription information of the terminal device are also different. The following separately provides descriptions.

In a possible implementation, the first network device is the macro network device that provides, when a backhaul link is not interrupted, a service for the terminal device that accesses the first access network device, and the first network device obtains the authentication subscription information of the terminal device from a BOSS. For example, after the terminal device is registered with the BOSS, the BOSS synchronizes the authentication subscription information of the at least one registered terminal device to the first network device (namely, the macro core network device and the macro MC system). Specifically, if the first network device is the macro core network device, the macro core network device obtains core network authentication subscription information of the terminal device from the BOSS; and/or if the first network device is the macro MC system, the macro MC system obtains MC system authentication subscription information of the terminal device from the BOSS.

In another possible implementation, the first network device is the BOSS, and the first network device generates the authentication subscription information (including core network authentication subscription information and MC system authentication subscription information) of the terminal device. For example, in a process in which the terminal device registers with the BOSS, the BOSS can generate the core network authentication subscription information and the MC system authentication subscription information of the terminal device.

In another possible implementation, the first network device is the macro network device (namely, the macro core network device and the macro MC system) or the BOSS, and the first network device receives the manually configured authentication subscription information (including core network authentication subscription information and MC system authentication subscription information) of the terminal device.

Step 202: The first network device determines a second network device based on the identification information of the first access network device.

After the first network device receives the identification information of the terminal device and the identification information of the first access network device, the first network device triggers determining of the second network device based on the identification information of the first access network device.

The second network device is a local network device that provides, when the backhaul link is interrupted, a service for the terminal device that accesses the first access network device. In other words, the second network device is a local network device deployed near the first access network device. When backhaul communication between the first access network device and the macro network device (namely, the macro core network device and the macro MC system) is interrupted, the first access network device forwards related information such as an authentication request from the terminal device to the second network device, so that the terminal device is authenticated by the second network device to obtain a communication service. Optionally, the second network device is a local core network device configured near the first access network device, and/or the second network device is a local MC system configured near the first access network device. For example, FIG. 1 is used as an example. If the terminal device is the terminal device 1, the first access network device is the access network device 1, and the second network device is the local core network 1 and/or the local MC system 1; or if the terminal device is the terminal device 3, the first access network device is the access network device 2, and the second network device is the local core network 2 and/or the local MC system 2.

In a possible implementation, the first network device stores a first correspondence, and the first correspondence indicates a correspondence between the first access network device and the second network device. The first network device determines, based on the identification information of the first access network device and the first correspondence, the second network device corresponding to the first access network device.

For example, the first correspondence includes a first correspondence 1 and/or a first correspondence 2. The first correspondence 1 indicates a correspondence between the first access network device and the local core network device deployed near the first access network device, and the first correspondence 2 indicates a correspondence between the first access network device and the local MC system deployed near the first access network device.

Optionally, the first correspondence includes a correspondence between the identification information of the first access network device and address information of the second network device; or the first correspondence includes a correspondence between the identification information of the first access network device and identification information of the second network device. For example, the address information of the second network device may be an IP address of the second network device, or the like. For example, the address information of the second network device includes an IP address of the local core network device deployed near the first access network device, and/or an IP address of the local MC system deployed near the first access network device.

Optionally, the first network device stores a first mapping table, and the first mapping table is used to maintain a correspondence between an access network device and a local network device. For example, the first mapping table indicates a correspondence between an access network device and a local core network device, and/or indicates a correspondence between an access network device and a local MC system. The first mapping table includes the first correspondence. Optionally, the first mapping table includes a third correspondence and the like. The third correspondence is described in the following 203, and details are not described herein.

For example, the first mapping table includes identification information of an access network device and address information of a local network device. The first mapping table may be shown in the following Table 1-1.

**Table 1-1**

| | |
|---|---|
| Identification information of the access network device | Address information of the local network device |
| Identification information of the first access network device | Address information of the second network device |
| ... | ... |

Table 1-1 is used as an example. After the first network device receives the identification information of the first access network device, the first network device finds, in the first mapping table based on the identification information of the first access network device, the address information, of the second network device, corresponding to the identification information of the first access network device, which indicates that the local network device deployed near the first access network device and configured to provide, when the backhaul link is interrupted, the service for the terminal device that accesses the first access network device is the second network device. The first network device maintains the correspondence (for example, the first correspondence) between the access network device and the local network device, and therefore the first network device can accurately query, based on the identification information of the first access network device, the second network device corresponding to the first access network device. This further helps improve accuracy of synchronizing, by the first network device, the authentication subscription information of the terminal device to the second network device.

Step 203: The first network device sends the authentication subscription information, of the terminal device, to be synchronized to the second network device. Correspondingly, the second network device receives the authentication subscription information of the terminal device.

Specifically, the first network device determines, based on a connection status between the first network device and the second network device, to synchronize the authentication subscription information of the terminal device to the second network device in a direct manner or an indirect manner. The following separately provides descriptions.

In a possible implementation, the first network device directly sends the authentication subscription information of the terminal device to the second network device.

Specifically, the first network device sends the authentication subscription information of the terminal device to the second network device if the first network device determines that a connection path between the first network device and the second network device is not interrupted.

Optionally, the first network device encapsulates the address information of the second network device in a packet header, and encapsulates the authentication subscription information of the terminal device in a payload of a packet, so that after the first network device sends the packet, the packet can be transmitted to the second network device. For example, the first network device sends a first packet, where a destination address field of a packet header of the first packet carries address information of the second network device, and a payload field of the first packet carries authentication subscription information of the terminal device. Optionally, the packet may be an IP packet. This is not limited in this application. The authentication subscription information of the terminal device is synchronized through the connection path between the first network device and the second network device. This helps ensure efficiency of synchronizing the authentication subscription information.

In an example, if the first network device is the macro core network device, and the second network device is the local core network device deployed near the first access network device, the macro core network device sends the core network authentication subscription information of the terminal device through an interface between the macro core network device and the local core network device; or if the first network device is the macro MC system, and the second network device is the local MC system deployed near the first access network device, the macro MC system sends the MC system authentication subscription information of the terminal device through an interface between the macro MC system and the local MC system. For details, refer to related descriptions in the following embodiment corresponding to FIG. 3A and FIG. 3B. Details are not described herein.

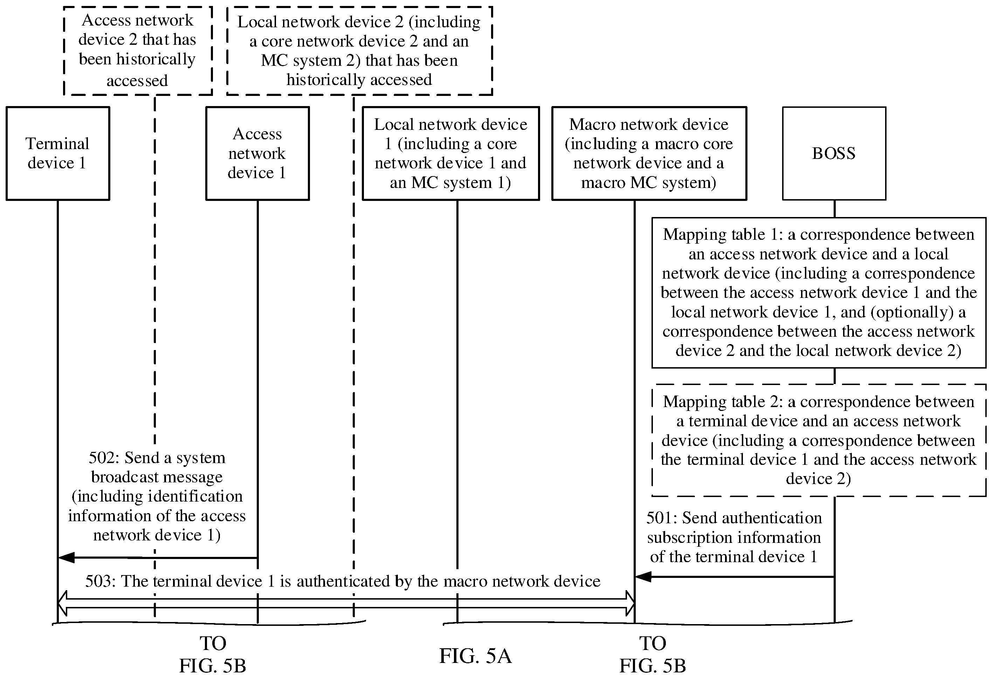

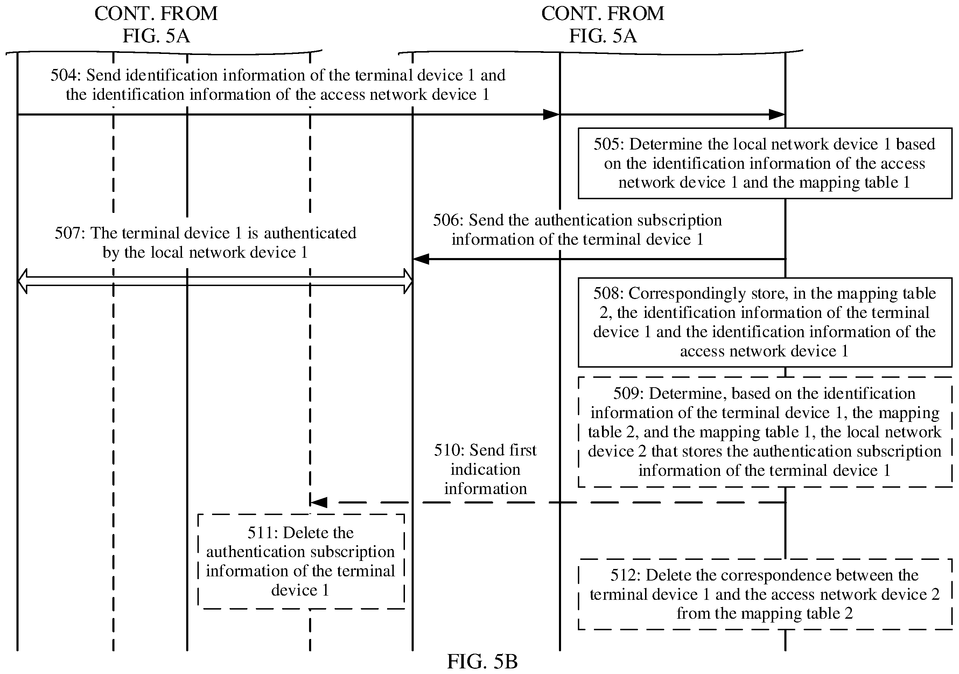

In another example, if the first network device is the BOSS, and the second network device is the local core network device deployed near the first access network device and the local MC system deployed near the first access network device, the BOSS sends the core network authentication subscription information of the terminal device to the local core network device deployed near the first access network device and the MC system authentication subscription information of the terminal device to the local MC system deployed near the first access network device. For details, refer to related descriptions in the following embodiment corresponding to FIG. 5A and FIG. 5B. Details are not described herein.

In another example, if the first network device is the BOSS, and the second network device is the local core network device deployed near the first access network device and the local MC system deployed near the first access network device, the BOSS sends the core network authentication subscription information of the terminal device and the MC system authentication subscription information of the terminal device to the local MC system deployed near the first access network device, and the local MC system deployed near the first access network device synchronizes the core network authentication subscription information to the core network device deployed near the first access network device; or the BOSS sends the core network authentication subscription information of the terminal device and the MC system authentication subscription information of the terminal device to the local core network device deployed near the first access network device, and the local core network device deployed near the first access network device synchronizes the MC system authentication subscription information to the MC system deployed near the first access network device. For details, refer to related descriptions in the following embodiment corresponding to FIG. 5A and FIG. 5B. Details are not described herein.

In another possible implementation, the first network device indirectly sends the authentication subscription information of the terminal device to the second network device, that is, the first network device forwards the authentication subscription information of the terminal device to the second network device via another device or network element.

Specifically, the first network device sends the authentication subscription information of the terminal device to the second network device via a third network device if the first network device determines that a connection path between the first network device and the second network device is interrupted. The third network device is a local network device that provides, when a backhaul link is interrupted, a service for a terminal device that accesses a second access network device, and there is a connection path between the first access network device and the second access network device. In other words, although the connection path between the first network device and the second network device is interrupted, a connection path between the first network device and the third network device is not interrupted, and there is a connection between the first access network device corresponding to the second network device and the second access network device corresponding to the third network device. Therefore, the first network device sends the authentication subscription information of the terminal device to the third network device, and the third network device forwards the authentication subscription information of the terminal device to the second network device through the connection path between the first access network device and the second access network device.

Specifically, before the first network device forwards the authentication subscription information of the terminal device to the second network device via the third network device, the first network device determines the second access network device based on the identification information of the first access network device and the third network device corresponding to the second access network device. For example, the first access network device determines, based on the identification information of the first access network device, the second access network device that has the connection to the first access network device, and then determines that a local network device corresponding to the second access network device is the third network device.

In a possible implementation, the first network device stores a second correspondence, the second correspondence indicates a correspondence between the first access network device and the second access network device, and the second access network device is an access network device for which there is a connection path to the first access network device. In addition, the first network device stores a third correspondence, and the third correspondence indicates a correspondence between the second access network device and the third network device. The first network device determines the second access network device based on the identification information of the first access network device and the second correspondence. The first access network device determines, based on identification information of the second access network device and the third correspondence, the third network device corresponding to the second access network device.

It should be understood that although the connection path between the first network device and the second network device is interrupted, the connection path between the first network device and the third network device is not interrupted, and there is the connection between the first access network device corresponding to the second network device and the second access network device corresponding to the third network device. Therefore, the first network device sends the authentication subscription information of the terminal device to the third network device, and the third network device forwards the authentication subscription information of the terminal device to the second network device through the connection path between the first access network device and the second access network device. This helps improve reliability of synchronizing the authentication subscription information by the first network device to the second network device.

Optionally, the second correspondence includes a correspondence between the identification information of the first access network device and the identification information of the second access network device. Optionally, the first network device stores a second mapping table, and the second mapping table is used to maintain a correspondence between an access network device and an adjacent access network device. It may also be understood that the second mapping table is used to maintain a correspondence between access network devices between which there is a connection path. The second mapping table includes the second correspondence.

For example, the second mapping table includes identification information of access network devices. The second mapping table may be shown in the following Table 2-1.

**Table 2-1**

| | |
|---|---|
| Identification information of the access network device | Identification information of the adjacent access network device |
| Identification information of the first access network device | Identification information of the second access network device |
| ... | ... |

It should be understood that the access network device adjacent to the first access network device may be more than the second access network device. In this application, only an example in which the access network device adjacent to the first access network device is the second access network device is used for description.

Optionally, the third correspondence includes a third correspondence 1 and/or a third correspondence 2. The third correspondence 1 indicates a correspondence between the second access network device and a local core network device deployed near the second access network device, and the third correspondence 2 indicates a correspondence between the second access network device and a local MC system deployed near the second access network device.

Optionally, the third correspondence includes a correspondence between the identification information of the second access network device and address information of the third network device; or the third correspondence includes a correspondence between the identification information of the second access network device and identification information of the third network device. For example, the address information of the third network device may be an IP address of the third network device, or the like. For example, the address information of the third network device includes an IP address of the local core network device deployed near the second access network device, and/or an IP address of the local MC system deployed near the second access network device. The first network device not only maintains the correspondence (for example, the first correspondence and the third correspondence) between the access network device and the local network device, but also maintains the correspondence (for example, the second correspondence) between the access network device and the adjacent access network device (or a connected access network device), so that the first network device searches, based on the identification information of the first access network device and the second correspondence, for the second access network device connected to the first access network device, and then searches, based on the identification information of the second access network device and the third correspondence, for the third network device deployed near the second access network device. The foregoing correspondences are maintained. This helps the first network device search for a path for forwarding the authentication subscription information of the terminal device, and improve efficiency of synchronizing, by the first network device, the authentication subscription information of the terminal device.

Optionally, in addition to the first correspondence, the first mapping table stored in the first network device further includes the third correspondence. For example, the first mapping table includes identification information of an access network device and address information of a local network device. When the first mapping table includes the first correspondence and the third correspondence, the first mapping table may be shown in the following Table 1-2.

**Table 1-2**

| Identification information of the access network device | Address information of the local network device |
|---|---|
| Identification information of the first access network device | Address information of the second network device |
| Identification information of the second access network device | Address information of the third network device |
| ... | ... |

Table 2-1 and Table 1-2 are used as an example. After the first network device determines the identification information of the second access network device based on the identification information of the first access network device and the second mapping table, the first network device finds, in the first mapping table based on the identification information of the second access network device, the address information, of the third network device, corresponding to the identification information of the second access network device, which indicates that the local network device deployed near the second access network device and configured to provide, when the backhaul link is interrupted, the service for the terminal device that accesses the second access network device is the third network device. Then, the first network device sends the authentication subscription information of the terminal device to the second network device via the third network device.

Optionally, the first network device encapsulates the address information of the third network device in a packet header, and encapsulates the authentication subscription information of the terminal device and the address information of the second network device in a payload of a packet, so that after the first network device sends the packet, the packet can be transmitted to the third network device. Then, the third network device generates another packet, a packet header of the packet includes the address information of the second network device, and a payload of the packet includes the authentication subscription information of the terminal device, so that after the third network device sends the packet, the packet can be transmitted to the second network device. Optionally, the packet may be an IP packet. This is not limited in this application. The payload of the second packet carries the address information of the second network device and the authentication subscription information of the terminal device, to indicate that a final receiver of the authentication subscription information of the terminal device is the second network device instead of another network device. This helps a network device (for example, the third network device) that receives the second packet forward the authentication subscription information of the terminal device to the second network device.

Step 204: The second network device authenticates, based on the authentication subscription information of the terminal device, the terminal device that applies for authentication.

In this embodiment, step 204 is optional.

After the second network device receives the authentication subscription information of the terminal device, when the backhaul communication of the first access network device is interrupted, the first access network device broadcasts second indication information in a system message, where the second indication information indicates that the backhaul communication of the first access network device is interrupted. After the terminal device receives the second indication information, the terminal device enters an IOPS mode, and accesses the first access network device via an access type (for example, the access type is 11-15) corresponding to the IOPS mode. After the first access network device receives an authentication request from the terminal device, the first access network device forwards the authentication to the second network device, and the second network device authenticates, based on the authentication subscription information of the terminal device, the terminal device that applies for authentication.

For example, if the second network device is the local core network device, the second network device can authenticate the terminal device based on the core network authentication subscription information of the terminal device, and then provide a core network-related service; or if the second network device is the local MC system, the second network device can authenticate the terminal device based on the MC system authentication subscription information of the terminal device, and then provide an MC service-related service.

Step 205: The first network device sends first indication information.

In this embodiment, step 205 is optional.

In a possible implementation, when the terminal device leaves the first access network device or the terminal device camps on a new access network device (for example, a fourth access network device), the first network device directly or indirectly sends the first indication information to the second network device, where the first indication information indicates to delete the authentication subscription information of the terminal device. For example, the first network device obtains the identification information of the terminal device and identification information of the fourth access network device, and the fourth access network device is different from the first access network device, that is, the identification information of the fourth access network device is different from the identification information of the first access network device. The first network device determines, based on the identification information of the fourth access network device and the identification information of the terminal device, that the terminal device has left the first access network device and accessed the fourth access network device, and then the first network device directly or indirectly sends the first indication information to the second network device. In an example, if the connection path between the first network device and the second network device is not interrupted, the first network device directly sends the first indication information to the second network device. In another example, if the connection path between the first network device and the second network device is interrupted, the first network device forwards the authentication subscription information of the terminal device to the second network device via another device or network element. For example, the first network device sends the first indication information to the second network device via the third network device. For descriptions of the third network device, refer to the related descriptions in step 203. Details are not described herein again.

In this implementation, it is proposed that if a local network device corresponding to an access network device (namely, the fourth network device corresponding to a third access network device) that the terminal device has historically accessed stores the authentication subscription information of the terminal device, the first network device stores identification information of the third access network device and address information of the fourth network device. When the first network device receives the identification information of the terminal device and the identification information of the first access network device, it indicates that the terminal device has left the second access network device. Therefore, to ensure security of the authentication subscription information of the terminal device, the first network device indicates, by using the first indication information, the fourth network device to delete the authentication subscription information of the terminal device stored in the fourth network device.

In a possible implementation, if the terminal device has accessed another access network device (for example, the third access network device) before accessing the first access network device, and the first network device has synchronized the authentication subscription information of the terminal device to a local network device (for example, the fourth network device, where the fourth network device is a local network device that provides, when a backhaul link is interrupted, a service for the terminal device that accesses the third access network device) corresponding to the third access network device, after the first network device synchronizes the authentication subscription information of the terminal device to the second network device, the first network device further sends the first indication information to the fourth network device, so that the fourth network device deletes the authentication subscription information of the terminal device.

In this implementation, when the first network device receives the identification information of the terminal device and the identification information of the fourth access network device (different from the identification information of the first access network device), it indicates that the terminal device has left the first access network device. Therefore, to ensure security of the authentication subscription information of the terminal device, the first network device indicates, by using the first indication information, the second network device to delete the authentication subscription information of the terminal device stored in the second network device.

Step 206: The second network device deletes the authentication subscription information of the terminal device.

In this embodiment, step 206 is optional. When the first network device performs step 205, and after the second network device receives the authentication subscription information of the terminal device, the second network device performs step 206.

In a possible implementation, the first indication information includes the identification information of the terminal device, and the second network device determines, based on the identification information of the terminal device, to delete authentication subscription information of which terminal device.

In another possible implementation, the first indication information and the identification information of the terminal device are carried in one message. For example, the second network device receives a message 2, where the message 2 includes the identification information of the terminal device and the first indication information. In this case, the second network device determines, based on the identification information of the terminal device in the message 2, to delete authentication subscription information of which terminal device.

In this application, the first network device can obtain the identification information of the terminal device and the identification information of the first access network device, determine the second network device (namely, the local network device that provides, when the backhaul link is interrupted, the service for the terminal device that accesses the first access network device) based on the identification information of the first access network device, and further send the authentication subscription information of the terminal device to the second network device, so that when the terminal device camps on the first access network device, the second network device can authenticate the terminal device based on the authentication subscription information of the terminal device, and further provide the communication service for the terminal device. The first network device synchronizes, to the second network device, only the authentication subscription information of the terminal device that may camp on the first access network device, instead of synchronizing authentication subscription information of all terminal devices. This helps save storage space of the local network device (namely, the second network device), and reduce a requirement on storage performance of the local network device. In addition, only authentication subscription information of a part of terminal devices is synchronized to the second network device, and authentication subscription information of the remaining terminal device is still stored in the first network device. This helps reduce a risk of disclosing the authentication subscription information of the terminal device in a synchronization process, and improve security of storing the authentication subscription information of the terminal device.

The following further describes, with reference to FIG. 3A and FIG. 3B and FIG. 5A and FIG. 5B, a case in which the first network device can directly send the authentication subscription information of the terminal device to the second network device in the information synchronization method provided in this application.

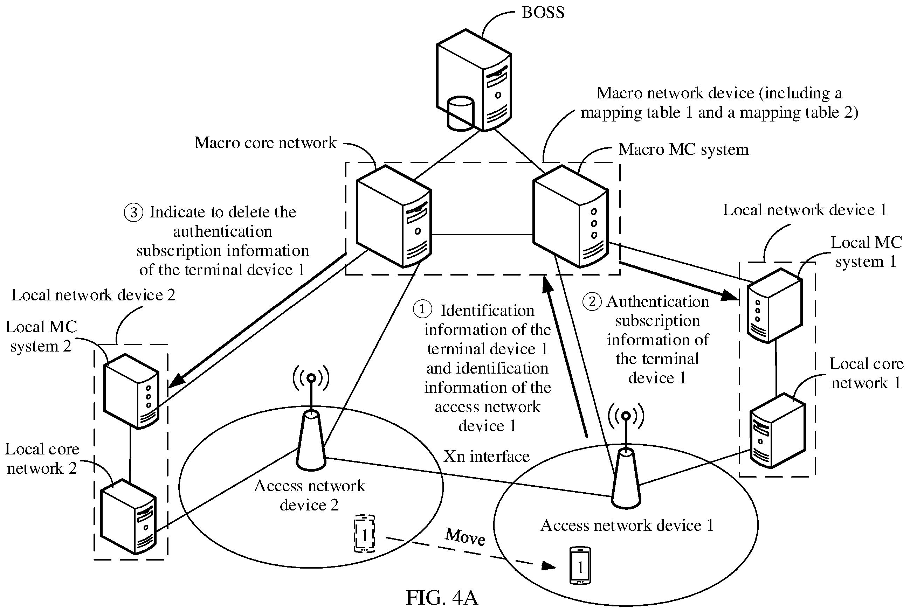

As shown in FIG. 3A and FIG. 3B and FIG. 4A, mapping tables are maintained in a macro network device. The macro network device is an example of the first network device, an access network device 1 is an example of the first access network device, a local network device 1 is an example of the second network device, an access network device 2 is an example of the third access network device that the terminal device has historically accessed, a local network device 2 is an example of the fourth network device corresponding to the third access network device, and a terminal device 1 is an example of the terminal device. In this embodiment, each network element mainly performs the following steps.

Step 301: A BOSS sends authentication subscription information of the terminal device 1 to the macro network device. Correspondingly, the macro network device receives, from the BOSS, the authentication subscription information of the terminal device 1.

After the terminal device 1 is registered with the BOSS, the BOSS can obtain the authentication subscription information of the terminal device 1. The authentication subscription information, of the terminal device 1, in the BOSS may be generated by the BOSS, or may be manually configured. This is not limited in this embodiment.

The authentication subscription information of the terminal device 1 includes core network authentication subscription information of the terminal device 1 and MC system authentication subscription information of the terminal device 1.

For example, when the macro network device is a macro core network device, the BOSS sends the core network authentication subscription information of the terminal device 1 to the macro core network device. Optionally, the core network authentication subscription information of the terminal device 1 includes core network authentication information and core network subscription information.

The core network authentication information includes information such as an international mobile subscriber identity (international mobile subscriber identity, IMSI), an individual subscriber authentication key (individual subscriber authentication key, KI), and an operator variant algorithm configuration field (operator variant algorithm configuration field, OP). The core network subscription information includes information such as an access point name (access point name, APN), a QoS class identifier (QoS class identifier, QCI), a user equipment-aggregate maximum bit rate (user equipment-aggregate maximum bit rate, UE-AMBR), and an allocation and retention priority (allocation and retention priority, ARP). The IMSI may uniquely identify a terminal device, that is, the IMSI is identification information of the terminal device 1.

For example, when the macro network device is a macro MC system, the BOSS sends the MC system authentication subscription information of the terminal device 1 to the macro MC system. Optionally, the MC system authentication subscription information of the terminal device 1 includes MC system authentication information and MC system subscription information.

The MC system authentication information includes information such as a mission critical user identity (Mission Critical user identity, MC ID), a mission critical user password (Mission Critical user password), an IP multimedia private identity (Internet Protocol multimedia private identity, IMPI), and an IP multimedia public identity (IP multimedia public identity, IMPU). The MC system subscription information includes information such as a group identifier (Group ID), a user priority, an emergency call number, an emergency call type, and a service capability supported by a user (for example, whether the user supports a point-to-point call, a group call, a video call, or a short message service). The MC ID may uniquely identify an MC client (MC client). Because the terminal device 1 is installed with the MC client, the MC ID may also be used as identification information of the terminal device 1.

It should be understood that the BOSS may send only the authentication subscription information of the terminal device 1 to the macro network device, or may send authentication subscription information of a plurality of terminal devices to the macro network device, where the authentication subscription information of the plurality of terminal devices includes the authentication subscription information of the terminal device 1. The authentication subscription information of the terminal device 1 includes the identification information (for example, the IMSI and the MC ID) of the terminal device 1. Therefore, the macro network device can find the authentication subscription information of the terminal device 1 from the received authentication subscription information of the plurality of terminal devices.

Step 302: The access network device 1 sends a system broadcast message. Correspondingly, the terminal device 1 receives the system broadcast message.

When the terminal device camps on the access network device 1, the terminal device 1 receives the system broadcast message from the access network device 1, and the system broadcast message includes identification information of the access network device 1. The terminal device 1 parses the system broadcast message to obtain the identification information of the access network device 1.

For example, the system broadcast message may be a system information block (system information block, SIB1) message, the identification information of the access network device 1 may be an E-UTRAN cell global identifier (E-UTRAN cell global identifier, ECGI), and the ECGI includes a public land mobile network identity (Public Land Mobile Network Identity, PLMN Identity), a base station identifier (for example, an eNB ID), and a cell identifier (for example, a Cell ID).

Step 303: The terminal device 1 is authenticated by the macro network device.

For example, when the macro network device is the macro core network device, the terminal device 1 is authenticated by the macro core network device, that is, the macro core network device authenticates the terminal device 1 based on the core network authentication subscription information of the terminal device 1.

For example, when the macro network device is the macro MC system, the terminal device 1 is authenticated by the macro MC system, that is, the macro MC system authenticates the terminal device 1 based on the MC system authentication subscription information of the terminal device 1.

Step 304: The terminal device 1 sends the identification information of the terminal device 1 and the identification information of the access network device 1 to the macro network device. Correspondingly, the macro network device receives the identification information of the terminal device 1 and the identification information of the access network device 1 from the terminal device 1.

For specific examples of the identification information of the access network device 1 and the identification information of the terminal device 1, refer to related descriptions in step 301 and step 302. Details are not described herein again.

Specifically, the terminal device 1 sends the identification information of the terminal device 1 and the identification information of the access network device 1 to the macro network device via the access network device 1. For example, the terminal device 1 sends a message 1 to the access network device 1, and the access network device 1 sends the message 1 to the macro network device. The message 1 includes the identification information of the terminal device 1 and the identification information of the access network device 1. The identification information of the terminal device 1 and the identification information of the access network device 1 are used by the macro network device to determine, based on the identification information of the access network device 1, the local network device 1 corresponding to the access network device 1.

For example, when the macro network device is the macro core network device, the terminal device 1 sends a tracking area update (tracking area update, TAU) message to the macro core network device, where the TAU message includes the identification information of the terminal device 1 and the identification information of the access network device 1. Correspondingly, the macro core network device obtains the identification information of the terminal device 1 and the identification information of the access network device 1 from the received TAU message.

For example, when the macro network device is the macro MC system, the terminal device 1 sends a location information report message to the macro MC system, where the location information report message includes the identification information of the terminal device 1 and the identification information of the access network device 1. Correspondingly, the macro MC system obtains the identification information of the terminal device 1 and the identification information of the access network device 1 from the received location information report message.

Step 305: The macro network device determines the local network device 1 based on the identification information of the access network device 1 and a mapping table 1.

The macro network device stores the mapping table 1, and the mapping table 1 is used to maintain a correspondence between an access network device and a local network device, and indicates that the local network device is deployed near the access network device, so that the local network device replaces the macro network device to provide, when backhaul communication is interrupted, a service for a terminal device that accesses the access network device. The mapping table 1 includes a correspondence between the access network device 1 and the local network device 1. For example, the mapping table 1 stores the identification information of the access network device 1 and address information of the local network device 1; or the mapping table 1 stores the identification information of the access network device 1 and identification information of the local network device 1.

The local network device 1 includes a local core network device 1 and a local MC system 1. The mapping table 1 includes a correspondence between the access network device 1 and the local core network device 1, and/or a correspondence between the access network device 1 and the local MC system 1.

For example, if the macro network device is the macro core network device, the mapping table 1 stored in the macro core network device includes the identification information of the access network device 1 and address information of the local core network device 1, and the mapping table 1 may be shown in the following Table 3-1.

**Table 3-1**

| Identification information of the access network device | Address information of the local core network device |
|---|---|
| Identification information of the access network device 1 | Address information of the local core network device 1 |
| ... | ... |

Table 3-1 is used as an example. After the macro core network device receives the identification information of the access network device 1, the macro core network device finds, in the mapping table 1 based on the identification information of the access network device 1, the address information, of the local core network device 1, corresponding to the identification information of the access network device 1, which indicates that a local core network device deployed near the access network device 1 and configured to provide, when a backhaul link is interrupted, a service for the terminal device 1 that accesses the access network device 1 is the local core network device 1.

For example, if the macro MC system is the macro MC system, the mapping table 1 stored in the macro MC system includes the identification information of the access network device 1 and address information of the local MC system 1, and the mapping table 1 may be shown in the following Table 3-2:

**Table 3-2**

| Identification information of the access network device | Address information of the local MC system |
|---|---|
| Identification information of the access network device 1 | Address information of the local MC system 1 |
| ... | ... |

Table 3-2 is used as an example. After the macro MC system receives the identification information of the access network device 1, the macro MC system finds, in the mapping table 1 based on the identification information of the access network device 1, the address information, of the local MC system 1, corresponding to the identification information of the access network device 1, which indicates that a local MC system deployed near the access network device 1 and configured to provide, when a backhaul link is interrupted, a service for the terminal device 1 that accesses the access network device 1 is the local MC system 1.

Optionally, the mapping table 1 further includes identification information of another access network device and address information of another local network device.

For example, the mapping table 1 stored by the macro core network device further includes identification information of an access network device 2 and address information of a local core network device 2. Table 3-3 shows the details.

**Table 3-3**

| Identification information of the access network device | Address information of the local core network device |
|---|---|
| Identification information of the access network device 1 | Address information of the local core network device 1 |
| Identification information of the access network device 2 | Address information of the local core network device 2 |
| ... | ... |

For another example, the mapping table 1 stored in the macro MC system further includes identification information of an access network device 2 and address information of a local MC system 2. Table 3-4 shows the details.

**Table 3-4**

| Identification information of the access network device | Address information of the local MC system |
|---|---|
| Identification information of the access network device 1 | Address information of the local MC system 1 |
| Identification information of the access network device 2 | Address information of the local MC system 2 |
| ... | ... |

Step 306: The macro network device sends the authentication subscription information of the terminal device 1 to the local network device 1.

For example, when the macro network device is the macro core network device, the local network device 1 is the local core network device 1, and the macro core network device sends the core network authentication subscription information of the terminal device 1 to the local core network device 1. For example, the macro core network device sends a packet 1-1, where a payload of the packet 1-1 is encapsulated with the core network authentication subscription information of the terminal device 1, and a destination address field of a packet header of the packet 1-1 is encapsulated with the address information of the local core network device 1. The local core network device 1 parses the payload of the received packet 1-1 to obtain the core network authentication subscription information of the terminal device 1, and stores the core network authentication subscription information of the terminal device 1, so that the core network authentication subscription information of the terminal device 1 is used when the terminal device 1 applies for authentication in the local core network device 1 in the future.

For example, when the macro network device is the macro MC system, the local network device 1 is the local MC system 1, and the macro MC system sends the MC system authentication subscription information of the terminal device 1 to the local MC system 1. For example, the macro MC system sends a packet 1-2, where a payload of the packet 1-2 is encapsulated with the MC system authentication subscription information of the terminal device 1, and a destination address field of a packet header of the packet 1-2 is encapsulated with the address information of the local MC system 1. The local MC system 1 parses the payload of the received packet 1-2 to obtain the MC system authentication subscription information of the terminal device 1, and stores the MC system authentication subscription information of the terminal device 1, so that the MC system authentication subscription information of the terminal device 1 is used when the terminal device 1 applies for authentication in the local MC system 1 in the future.

Step 307: The terminal device 1 is authenticated by the local network device 1.

In this embodiment, step 307 is optional.

When backhaul communication of the access network device 1 is interrupted, the access network device 1 broadcasts, in a system message (for example, a SIB1), second indication information (for example, an IOPS PLMN) indicating that the backhaul communication of the access network device 1 is interrupted. After the terminal device 1 receives the second indication information, the terminal device 1 enters an IOPS mode, and accesses the access network device 1 via an access type (for example, the access type is 11-15) corresponding to the IOPS mode. Then, the terminal device 1 sends a request message for authentication in the core network device 1 and a request message for authentication in the MC system 1. After the access network device 1 receives, from the terminal device 1, the request message for authentication in the core network device 1, the access network device 1 forwards the request message for authentication in the core network device 1 to the local core network device 1, and the access network device 1 forwards the request message for authentication in the MC system 1 to the local MC system 1. Then, the local core network device 1 can authenticate the terminal device 1 based on the core network authentication subscription information of the terminal device 1, and provide a core network-related service. In addition, the local MC system 1 can authenticate the terminal device 1 based on the MC system authentication subscription information of the terminal device 1, and provide an MC service-related service.

Step 308: The macro network device correspondingly stores, in a mapping table 2, the identification information of the terminal device 1 and the identification information of the access network device 1.

In this embodiment, step 308 is optional. There is no limitation on a time sequence between step 308 and step 305 to step 307, provided that step 308 is performed after step 304.

The macro network device stores the mapping table 2, and the mapping table 2 is used to maintain a correspondence between a terminal device and an access network device accessed by the terminal device. The mapping table 2 can not only reflect which access network devices have been accessed by the terminal device, but also indirectly reflect local network devices corresponding to which access network devices store authentication subscription information of the terminal device. For example, the mapping table 2 includes identification information of the terminal device and identification information of the access network device.

For example, after the macro network device correspondingly stores, in the mapping table 2, the identification information of the terminal device 1 and the identification information of the access network device 1, the mapping table 2 includes the identification information of the terminal device 1 and the identification information of the access network device 1, and the mapping table 2 may be shown in the following Table 4-1.

**Table 4-1**

| Identification information of the terminal device | Identification information of the access network device |
|---|---|
| Identification information of the terminal device 1 | Identification information of the access network device 1 |
| ... | ... |

Optionally, if before the terminal device 1 accesses the access network device 1, the terminal device 1 has accessed the access network device 2 and the macro network device has also synchronized the authentication subscription information of the terminal device to a local network device corresponding to the access network device 2, the terminal device 1 may correspondingly store, in the mapping table 2, the identification information of the terminal device 1 and identification information of the access network device 2. In this case, the mapping table 2 may be shown in the following Table 4-2.

**Table 4-2**

| Identification information of the terminal device | Identification information of the access network device |
|---|---|
| Identification information of the terminal device 1 | Identification information of the access network device 2 |
| Identification information of the terminal device 1 | Identification information of the access network device 1 |
| ... | ... |

Table 4-2 is used as an example. When the macro network device receives the identification information of the terminal device 1 and the identification information of the access network device 1, the macro network device can determine, based on the identification information of the terminal device 1, the identification information of the access network device 1, and the mapping table 2, that the access network device 1 currently accessed by the terminal device 1 and the access network device 2 accessed by the terminal device 1 last time are different access network devices. This further triggers the macro network device to correspondingly store, in the mapping table 2, the identification information of the terminal device 1 and the identification information of the access network device 1, and triggers the macro network device to perform step 309 to step 312.

It should be understood that, in this embodiment, step 309 to step 312 are optional. When the identification information of the access network device 1 received by the macro network device is the same as the identification information of the access network device 2, it indicates that the access network device 1 currently accessed by the terminal device 1 and the access network device 2 accessed by the terminal device 1 last time are a same access network device. In this case, the macro network device does not perform step 308, or step 309 to step 312.

Step 309: The macro network device determines, based on the identification information of the terminal device 1, the mapping table 2, and the mapping table 1, the local network device 2 that stores the authentication subscription information of the terminal device 1.

Specifically, the macro network device determines, based on the identification information of the terminal device 1 and the mapping table 2, that an access network device historically accessed by the terminal device 1 is the access network device 2, and then the macro network device determines, based on the identification information of the access network device 2 and the mapping table 1, the local network device 2 (namely, the local core network device 2 and the local MC system 2) corresponding to the access network device 2. The local network device 2 stores the authentication subscription information of the terminal device. For example, the local core network device 2 stores the core network authentication subscription information of the terminal device, and the local MC system 2 stores the MC system authentication subscription information of the terminal device.

Step 310: The macro network device sends first indication information to the local network device 2.

The first indication information indicates to delete the authentication subscription information of the terminal device 1 from the local network device 2.

Step 311: The local network device 2 deletes the authentication subscription information of the terminal device 1.

For example, the macro network device sends the first indication information to the local core network device 2, and the local core network device 2 receives the first indication information, and deletes the core network authentication subscription information of the terminal device 1 in response to the first indication information.

For example, the macro network device sends the first indication information to the local MC system 2, and the local MC system 2 receives the first indication information, and deletes the MC system authentication subscription information of the terminal device 1 in response to the first indication information.

Step 312: The macro network device deletes a correspondence between the terminal device 1 and the access network device 2 from the mapping table 2.

The mapping table 2 can not only reflect which access network devices have been accessed by the terminal device, but also indirectly reflect local network devices corresponding to which access network devices store authentication subscription information of the terminal device. After the macro network device indicates the local network device 2 to delete the authentication subscription information of the terminal device 1, the macro network device deletes the correspondence between the terminal device 1 and the access network device 2 in the mapping table 2.

In this embodiment, as shown in FIG. 4A, the mapping tables (including mapping relationships between the access network device and the local core network device, and between the access network device and the local MC system) are separately configured in the macro core network device and the macro MC system. The macro core network device stores at least the correspondence between the access network device and the local core network device, and the macro MC system stores at least the correspondence between the access network device and the local MC system. Therefore, the macro core network device and the macro MC system can respectively determine the core network authentication subscription information and the MC system authentication subscription information based on the mapping table stored in the macro core network device and the mapping table stored in the macro MC system. Further, the macro core network device and the macro MC system respectively synchronize the core network authentication subscription information and the MC system authentication subscription information to the local core network device 1 and the local MC system 1 that correspond to the access network device 1 accessed by the terminal device 1. This helps the macro core network device and the macro MC system respectively synchronize the core network authentication subscription information and the MC system authentication subscription information to the local core network device 1 and the local MC system 1, thereby improving synchronization efficiency of the authentication subscription information.

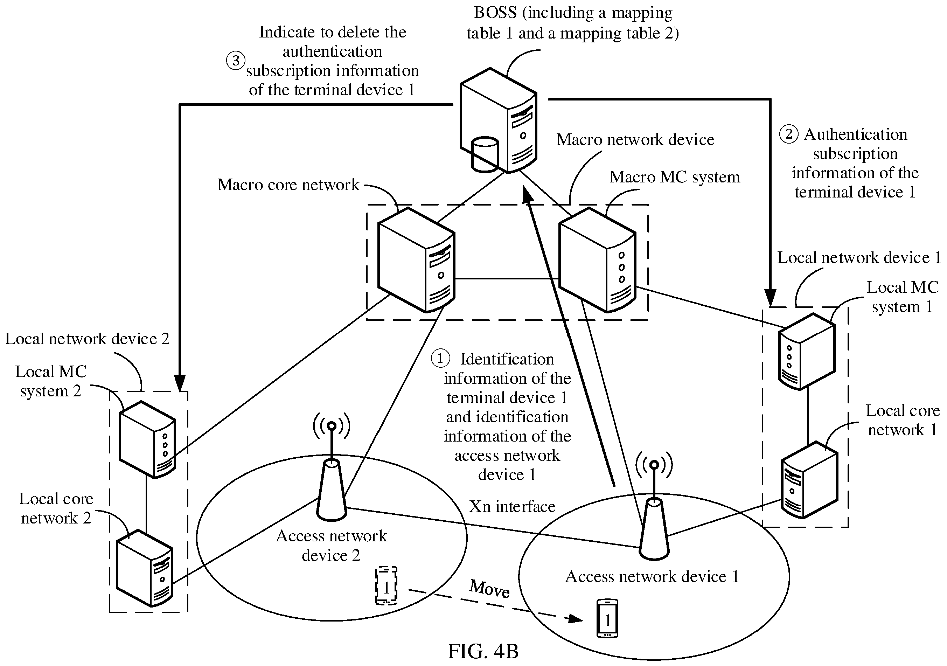

As shown in FIG. 5A and FIG. 5B and FIG. 4B, mapping tables are maintained in a BOSS. The BOSS is an example of the first network device, an access network device 1 is an example of the first access network device, a local network device 1 is an example of the second network device, an access network device 2 is an example of the third access network device that the terminal device has historically accessed, a local network device 2 is an example of the fourth network device corresponding to the third access network device, and a terminal device 1 is an example of the terminal device. In this embodiment, each network element mainly performs the following steps.

Step 501: The BOSS sends authentication subscription information of the terminal device 1 to a macro network device. Correspondingly, the macro network device receives, from the BOSS, the authentication subscription information of the terminal device 1.

Step 502: The access network device 1 sends a system broadcast message. Correspondingly, the terminal device 1 receives the system broadcast message.

Step 503: The terminal device 1 is authenticated by the macro network device.

In this embodiment, step 501 to step 503 are similar to step 301 to step 303 in the embodiment corresponding to FIG. 3A and FIG. 3B. For details, refer to the related descriptions in step 301 to step 303.

Step 504: The terminal device 1 sends identification information of the terminal device 1 and identification information of the access network device 1 to the BOSS via the macro network device. Correspondingly, the BOSS receives the identification information of the terminal device 1 and the identification information of the access network device 1 from the terminal device 1.

In a possible implementation, the macro network device is a macro MC system, and the terminal device 1 sends the identification information of the terminal device 1 and the identification information of the access network device 1 to the BOSS via the macro MC system. For example, the terminal device 1 sends a location information report message to the macro MC system, where the location information report message includes the identification information of the terminal device 1 and the identification information of the access network device 1, and then the macro MC system sends the identification information of the terminal device 1 and the identification information of the access network device 1 to the BOSS.

In a possible implementation, the macro network device is a macro core network device, and the terminal device 1 sends the identification information of the terminal device 1 and the identification information of the access network device 1 to the BOSS via the macro core network device. For example, the terminal device 1 sends a tracking area update TAU message to the macro core network device, where the TAU message includes the identification information of the terminal device 1 and the identification information of the access network device 1, and then the macro core network device sends the identification information of the terminal device 1 and the identification information of the access network device 1 to the BOSS.

Step 505: The BOSS determines the local network device 1 based on the identification information of the access network device 1 and a mapping table 1.

The BOSS stores the mapping table 1, and the mapping table 1 is used to maintain a correspondence between an access network device and a local network device, and indicates that the local network device is deployed near the access network device, so that the local network device replaces the macro network device to provide, when backhaul communication is interrupted, a service for a terminal device that accesses the access network device. The mapping table 1 includes a correspondence between the access network device 1 and the local network device 1. For example, the mapping table 1 stores the identification information of the access network device 1 and address information of the local network device 1; or the mapping table 1 stores the identification information of the access network device 1 and identification information of the local network device 1.

The local network device 1 includes a local core network device 1 and a local MC system 1. The mapping table 1 includes a correspondence between the access network device 1 and the local core network device 1, and/or a correspondence between the access network device 1 and the local MC system 1. For example, the mapping table 1 stores the identification information of the access network device 1, address information of the local core network device 1, and address information of the local MC system 1; or the mapping table 1 stores the identification information of the access network device 1, identification information of the local core network device 1, and identification information of the local MC system 1. For a specific example of the mapping table 1, refer to step 305. Details are not described herein again.

Step 506: The BOSS sends the authentication subscription information of the terminal device 1 to the local network device 1.

When a connection path between the BOSS and the local network device 1 is not interrupted, the BOSS sends the authentication subscription information of the terminal device 1 to the local network device 1 through an interface between the BOSS and the local network device 1.

In a possible implementation, the BOSS separately sends, to the local core network device 1 and the local MC system 1, the authentication subscription information used by the local core network device 1 and the local MC system 1. For example, the BOSS sends core network authentication subscription information of the terminal device 1 to the local core network device 1, and the BOSS sends MC system authentication subscription information of the terminal device 1 to the local MC system 1.

In another possible implementation, the BOSS sends the authentication subscription information (including core network authentication subscription information and MC system authentication subscription information) of the terminal device 1 to one local network device, and the local network device sends the authentication subscription information used by the local network device to the other local network device.

In an example, the BOSS sends the core network authentication subscription information of the terminal device 1 and the MC system authentication subscription information of the terminal device 1 to the local MC system 1, and then the local MC system 1 sends the core network authentication subscription information of the terminal device 1 to the local core network device 1.

In another example, the BOSS sends the core network authentication subscription information of the terminal device 1 and the core network authentication subscription information of the terminal device 1 to the local core network device 1, and then the local core network device 1 sends the MC system authentication subscription information of the terminal device 1 to the local MC system 1.

Step 507: The terminal device 1 is authenticated by the local network device 1.

In this embodiment, step 507 is optional. Step 507 is similar to step 307. For details, refer to the related descriptions in step 307. Details are not described herein again.

Step 508: The BOSS correspondingly stores, in a mapping table 2, the identification information of the terminal device 1 and the identification information of the access network device 1.

In this embodiment, step 508 is optional. There is no limitation on a time sequence between step 508 and step 505 to step 507, provided that step 508 is performed after step 504.

The BOSS stores the mapping table 2, and the mapping table 2 is used to maintain a correspondence between a terminal device and an access network device accessed by the terminal device. The mapping table 2 can not only reflect which access network devices have been accessed by the terminal device, but also indirectly reflect local network devices corresponding to which access network devices store authentication subscription information of the terminal device. For example, the mapping table 2 includes identification information of the terminal device and identification information of the access network device.

For example, after the BOSS correspondingly stores, in the mapping table 2, the identification information of the terminal device 1 and the identification information of the access network device 1, the mapping table 2 includes the identification information of the terminal device 1 and the identification information of the access network device 1. Optionally, if before the terminal device 1 accesses the access network device 1, the terminal device 1 has accessed the access network device 2, and the BOSS has also synchronized the authentication subscription information of the terminal device to a local network device corresponding to the access network device 2, the terminal device 1 may correspondingly store, in the mapping table 2, the identification information of the terminal device 1 and identification information of the access network device 2.

For descriptions of the mapping table 2, refer to step 508. Details are not described herein again.

Step 509: The BOSS determines, based on the identification information of the terminal device 1, the mapping table 2, and the mapping table 1, the local network device 2 that stores the authentication subscription information of the terminal device 1.

Specifically, the BOSS determines, based on the identification information of the terminal device 1 and the mapping table 2, that an access network device historically accessed by the terminal device 1 is the access network device 2, and then the BOSS determines, based on the identification information of the access network device 2 and the mapping table 1, the local network device 2 (namely, a local core network device 2 and a local MC system 2) corresponding to the access network device 2. The local network device 2 stores the authentication subscription information of the terminal device. For example, the local core network device 2 stores the core network authentication subscription information of the terminal device, and the local MC system 2 stores the MC system authentication subscription information of the terminal device.

Step 510: The BOSS sends first indication information to the local network device 2.

The first indication information indicates to delete the authentication subscription information of the terminal device 1 from the local network device 2.

Step 511: The local network device 2 deletes the authentication subscription information of the terminal device 1.

For example, the BOSS sends the first indication information to the local core network device 2, and the local core network device 2 receives the first indication information, and deletes the core network authentication subscription information of the terminal device 1 in response to the first indication information.

For example, the BOSS sends the first indication information to the local MC system 2, and the local MC system 2 receives the first indication information, and deletes the MC system authentication subscription information of the terminal device 1 in response to the first indication information.

Step 512: The BOSS deletes a correspondence between the terminal device 1 and the access network device 2 from the mapping table 2.

The mapping table 2 can not only reflect which access network devices have been accessed by the terminal device, but also indirectly reflect local network devices corresponding to which access network devices store authentication subscription information of the terminal device. After the BOSS indicates the local network device 2 to delete the authentication subscription information of the terminal device 1, the BOSS deletes the correspondence between the terminal device 1 and the access network device 2 in the mapping table 2.

In this embodiment, as shown in FIG. 4B, the mapping tables (including mapping relationships between the access network device and the local core network device, and between the access network device and the local MC system) are centrally configured in the BOSS. That is, operation and maintenance personnel only need to maintain the mapping relationships in the BOSS, and do not need to configure the mapping relationships in the macro MC system and the macro core network device separately. In other words, the operation and maintenance personnel do not need to configure and maintain the mapping relationships on two configuration interfaces. This reduces complexity of configuring and maintaining the mapping relationships by the operation and maintenance personnel. In addition, identification information of an access network device in which a terminal device is currently located is reported by the terminal to the macro MC system, and then forwarded by the macro MC system to the BOSS. Further, the BOSS adds or deletes authentication subscription information in a local MC system and a local core network device based on the mapping relationships. The terminal device needs to report, only to the macro MC system, identification information of the terminal device and the identification information of the access network device in which the terminal device is currently located, and does not need to separately report, to the macro MC system and the macro core network device, the identification information of the terminal device and the identification information of the access network device in which the terminal device is currently located. This can reduce signaling overheads caused by reporting the foregoing information by the terminal device.

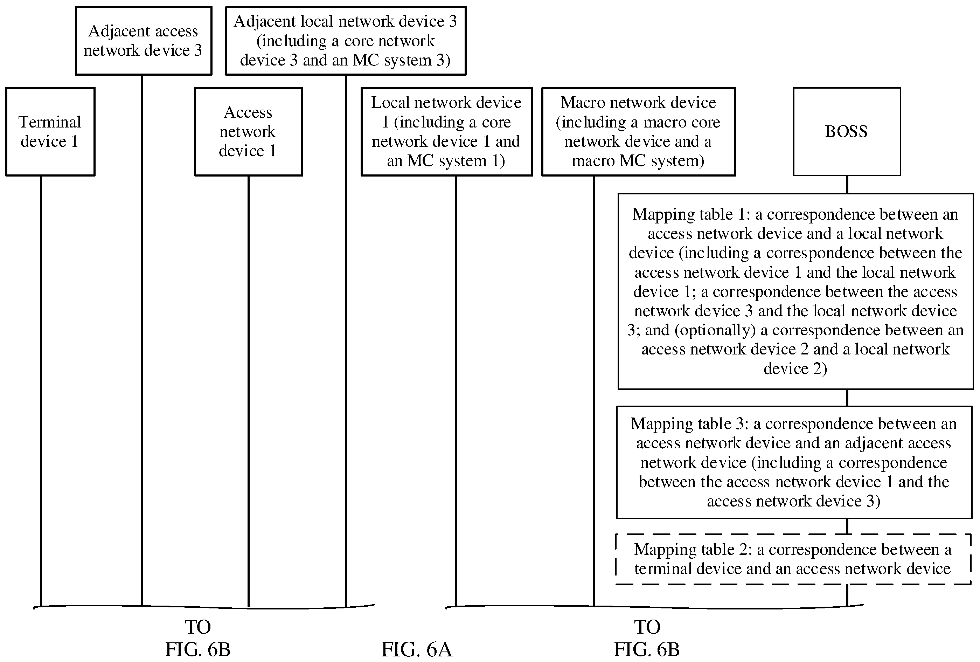

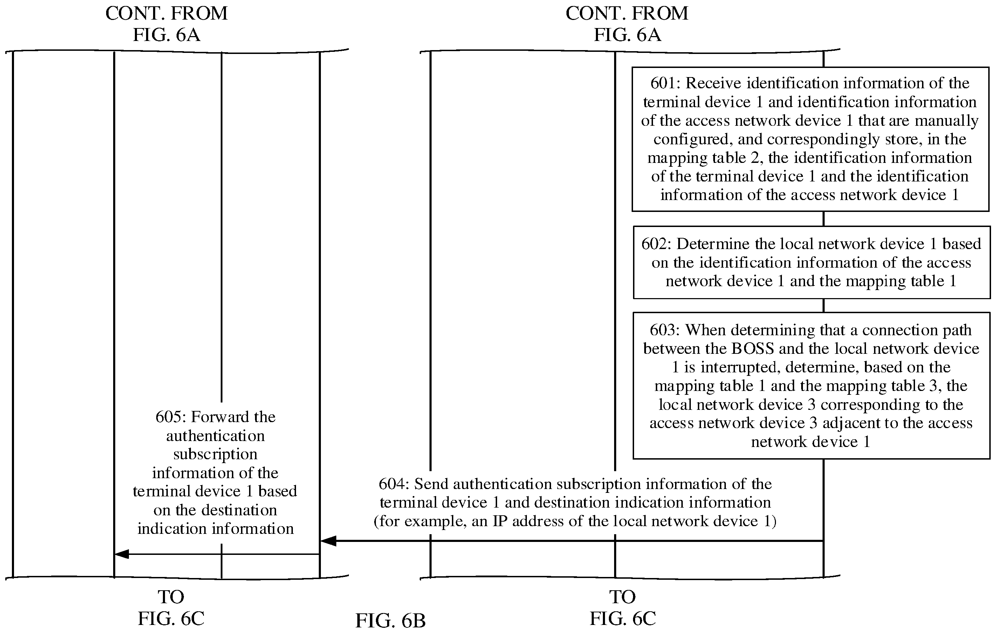

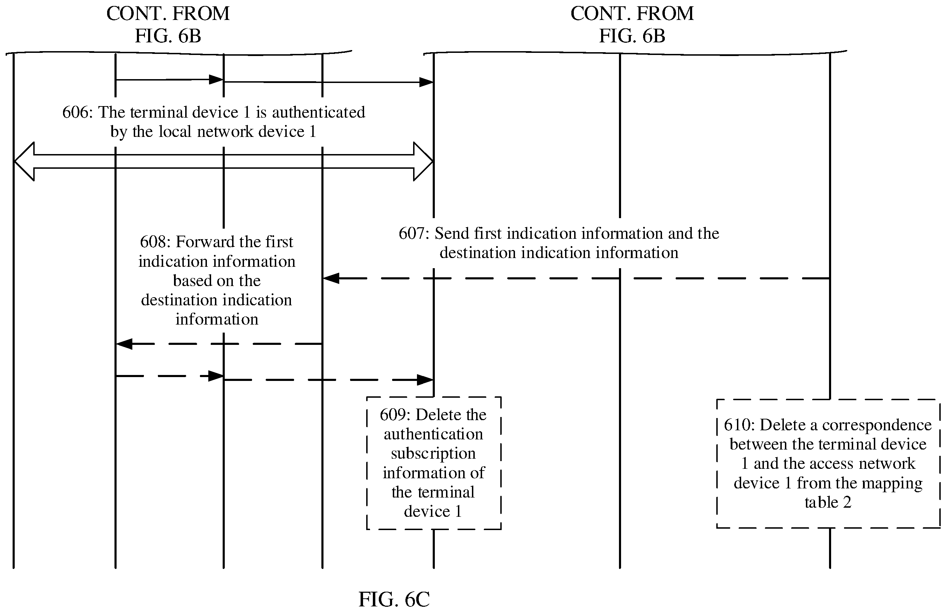

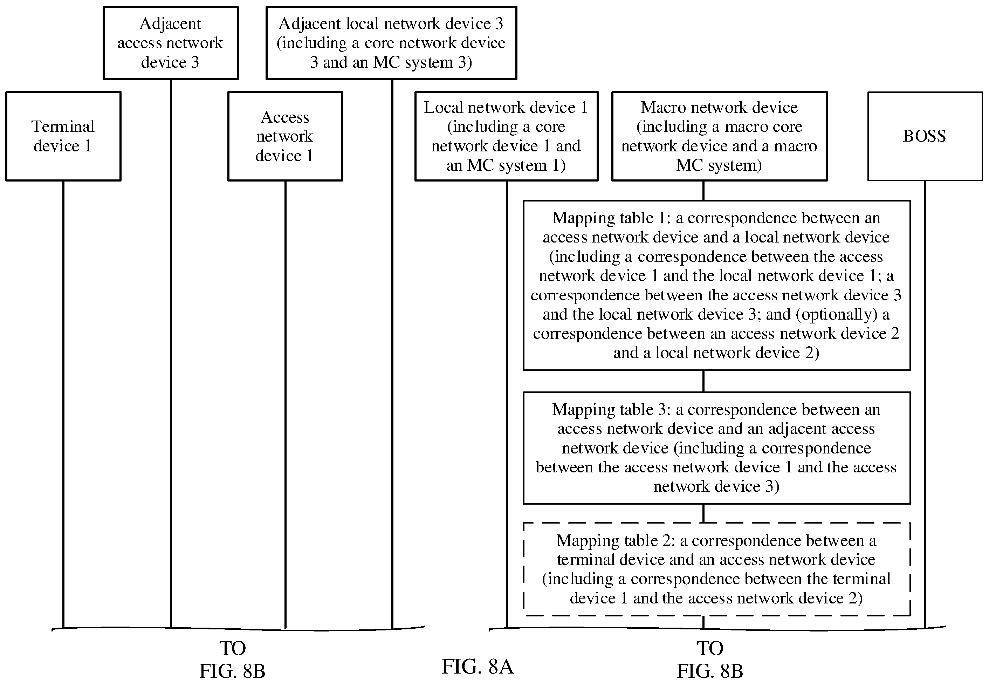

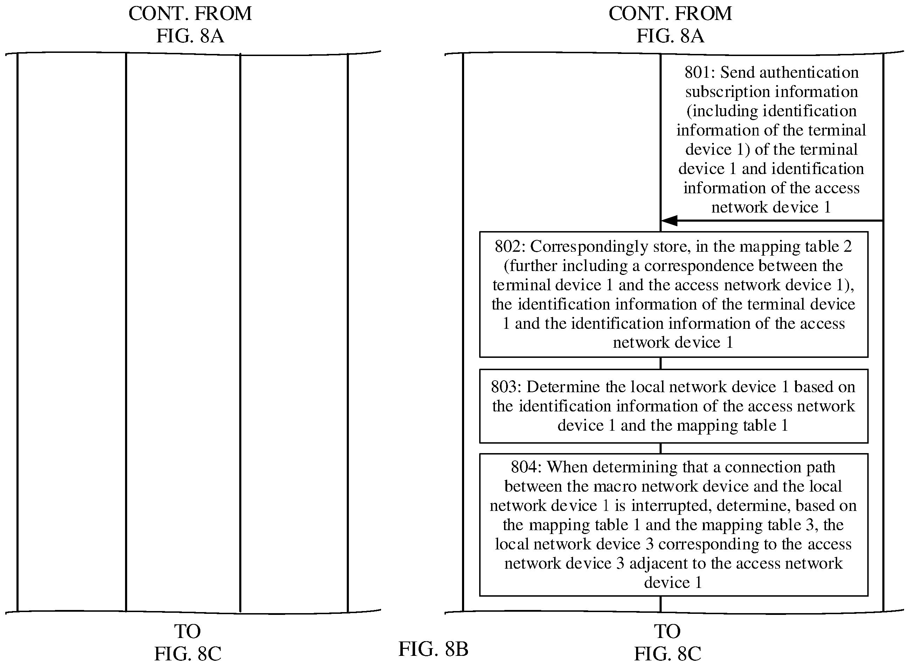

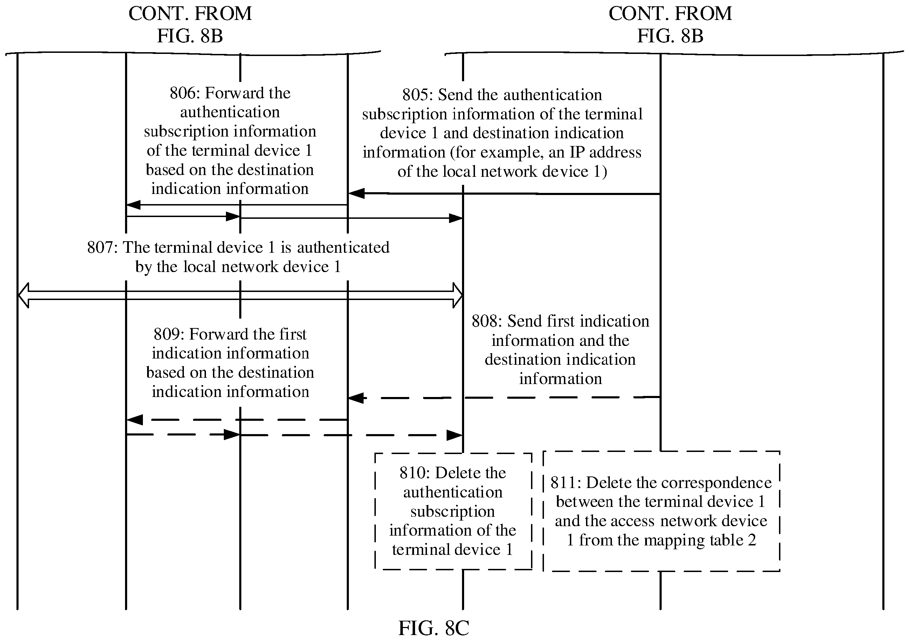

The following further describes, with reference to FIG. 6A to FIG. 6C and FIG. 8A to FIG. 8C, a case in which the first network device sends the authentication subscription information of the terminal device to the second network device via the another device or network element in the information synchronization method provided in this application.

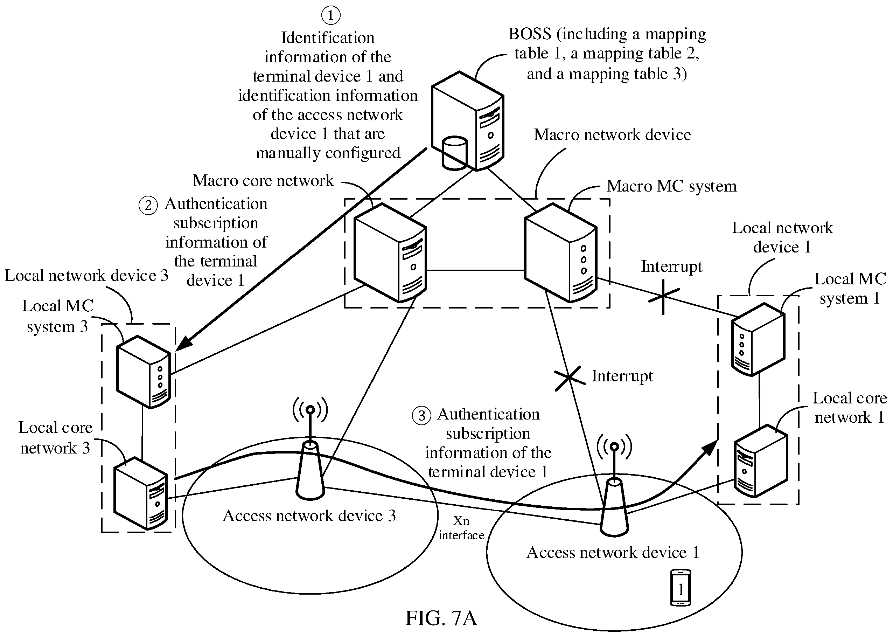

As shown in FIG. 6A to FIG. 6C and FIG. 7A, mapping tables are maintained in a BOSS. The BOSS is an example of the first network device, an access network device 1 is an example of the first access network device, a local network device 1 is an example of the second network device, an access network device 2 is an example of the third access network device that the terminal device has historically accessed, a local network device 2 is an example of the fourth network device corresponding to the third access network device, an access network device 3 is an example of the second access network device, a local network device 3 is an example of the third network device, and a terminal device 1 is an example of the terminal device. In this embodiment, each network element mainly performs the following steps.

Step 601: The BOSS receives identification information of the terminal device 1 and identification information of the access network device 1 that are manually configured, and correspondingly stores, in a mapping table 2, the identification information of the terminal device 1 and the identification information of the access network device 1.

It may also be understood that the BOSS receives a correspondence between the terminal device 1 and the access network device 1 that are manually configured, which indicates that the terminal device 1 may camp on or access the access network device 1 in the future. For specific examples of the identification information of the access network device 1 and the identification information of the terminal device 1, refer to related descriptions in step 301 and step 302. Details are not described herein again.

The BOSS stores the mapping table 2, and the mapping table 2 is used to maintain a correspondence between a terminal device and an access network device accessed by the terminal device. The mapping table 2 can not only reflect which access network devices have been accessed by the terminal device, but also indirectly reflect local network devices corresponding to which access network devices store authentication subscription information of the terminal device. For example, the mapping table 2 includes identification information of the terminal device and identification information of the access network device.

For example, after the BOSS correspondingly stores, in the mapping table 2, the identification information of the terminal device 1 and the identification information of the access network device 1, the mapping table 2 includes the identification information of the terminal device 1 and the identification information of the access network device 1. Optionally, if before the terminal device 1 accesses the access network device 1, the terminal device 1 has accessed the access network device 2, and the BOSS has also synchronized authentication subscription information of the terminal device to a local network device corresponding to the access network device 2, the terminal device 1 may correspondingly store, in the mapping table 2, the identification information of the terminal device 1 and identification information of the access network device 2.

Step 602: The BOSS determines the local network device 1 based on the identification information of the access network device 1 and a mapping table 1.

The BOSS stores the mapping table 1, and the mapping table 1 is used to maintain a correspondence between an access network device and a local network device, and indicates that the local network device is deployed near the access network device, so that the local network device replaces a macro network device to provide, when backhaul communication is interrupted, a service for a terminal device that accesses the access network device. The mapping table 1 includes a correspondence between the access network device 1 and the local network device 1.

The local network device 1 includes a local core network device 1 and a local MC system 1. The mapping table 1 includes a correspondence between the access network device 1 and the local core network device 1, and/or a correspondence between the access network device 1 and the local MC system 1. For a specific example of the mapping table 1, refer to step 305. Details are not described herein again.

After the BOSS determines the local network device 1 corresponding to the access network device 1, the BOSS starts to synchronize authentication subscription information of the terminal device 1 to the local network device 1. In this case, the BOSS first determines whether a connection path between the BOSS and the local network device 1 is interrupted. If the connection path between the BOSS and the local network device 1 is interrupted, the BOSS forwards the authentication subscription information of the terminal device 1 to the local network device 1 via another device or network element. Specifically, the BOSS performs step 603 to step 605. If the connection path between the BOSS and the local network device 1 is not interrupted, the BOSS sends the authentication subscription information of the terminal device to the local network device 1. For details, refer to the related descriptions in step 506.

Step 603: When the BOSS determines that the connection path between the BOSS and the local network device 1 is interrupted, the BOSS determines, based on the mapping table 1 and a mapping table 3, the local network device 3 corresponding to the access network device 3 adjacent to the access network device 1.

Because there is a communication interface between the local network device 1 and the access network device 1, the BOSS may transmit the authentication subscription information of the terminal device 1 to the local network device 1 via a device or a network element that has a communication interface with the access network device 1.

Specifically, the BOSS stores the mapping table 3, and the mapping table 3 is used to maintain a correspondence between an access network device and an adjacent access network device. It may also be understood that the mapping table 3 is used to maintain a correspondence between access network devices between which there is a connection path. The BOSS can determine, based on the mapping table 3, that there is a connection path between which access network devices and the access network device 1.

For example, the mapping table 3 includes identification information of access network devices, and the mapping table 3 may be shown in the following Table 5-1.

**Table 5-1**

| Identification information of the access network device | Identification information of the adjacent access network device |
|---|---|
| Identification information of the access network device 1 | Identification information of the access network device 3 |
| ... | ... |

Table 5-1 is used as an example. The BOSS can determine, based on the identification information of the access network device 1 and the mapping table 3, that an access network device connected to the access network device 1 is the access network device 3.

In addition, the BOSS also stores the mapping table 1, and the mapping table 1 is used to maintain a correspondence between an access network device and a local network device, and indicates that the local network device is deployed near the access network device, so that the local network device replaces the macro network device to provide, when backhaul communication is interrupted, a service for a terminal device that accesses the access network device. The mapping table 1 includes the correspondence between the access network device 1 and the local network device 1, and a correspondence between the access network device 3 and the local network device 3.

The local network device 1 includes a local core network device 1 and a local MC system 1. The mapping table 1 includes a correspondence between the access network device 1 and the local core network device 1, and a correspondence between the access network device 1 and the local MC system 1. For example, the mapping table 1 includes the identification information of the access network device 1, address information of the local core network device 1, and address information of the local MC system 1 that are correspondingly stored.

The local network device 3 includes a local core network device 3 and a local MC system 3. The mapping table 1 includes a correspondence between the access network device 3 and the local core network device 3, and a correspondence between the access network device 3 and the local MC system 3. For example, the mapping table 1 includes the identification information of the access network device 3, address information of the local core network device 3, and address information of the local MC system 3 that are correspondingly stored.

For example, the mapping table 1 stored by the BOSS may be shown in the following Table 3-5.

**Table 3-5**

| Identification information of the access network device | Address information of the local core network device | Address information of the local MC system |
|---|---|---|
| Identification information of the access network device 1 | Address information of the local core network device 1 | Address information of the local MC system 1 |
| Identification information of the access network device 3 | Address information of the local core network device 3 | Address information of the local MC system 3 |
| ... | ... | ... |

Table 3-5 is used as an example. The BOSS can determine, based on the identification information of the access network device 3 and the mapping table 1, the local network device 3 (namely, the local core network device 3 and the local MC system 3) corresponding to the access network device 3.

It should be understood that after the BOSS determines the local network device 3, if the BOSS determines that a connection path between the BOSS and the local network device 3 is not interrupted, the BOSS sends the authentication subscription information of the terminal device 1 to the local network device 3; or if the BOSS determines that the connection path between the BOSS and the local network device 3 is also interrupted, the BOSS queries, based on the mapping table 3 and the mapping table 1, another access network device connected to the access network device 1 and a local network device corresponding to the access network device. Details are not described herein.

Step 604: The BOSS sends the authentication subscription information of the terminal device 1 and destination indication information to the local network device 3.

The destination indication information indicates a final receiver of the authentication subscription information of the terminal device 1, namely, the local network device 1. For example, the destination indication information is the address information of the local network device 1 (namely, the address information of the local core network device 1 and the address information of the local MC system 1).

For example, the BOSS sends core network authentication subscription information of the terminal device 1 and the address information of the local core network device 1 to the local core network device 3. For example, the BOSS sends a packet 2-1, where a payload of the packet 2-1 is encapsulated with the core network authentication subscription information of the terminal device 1 and the address information of the local core network device 1, and a destination address field of a packet header of the packet 2-1 is encapsulated with the address information of the local core network device 3. The local core network device 3 parses the payload of the received packet 2-1 to obtain the core network authentication subscription information of the terminal device 1 and the address information of the local core network device 1, and the local core network device 3 can determine, based on the address information of the local core network device 1, that the core network authentication subscription information of the terminal device 1 needs to be forwarded to the local core network device 1. For a specific forwarding process, refer to step 605.

For example, the BOSS sends MC system authentication subscription information of the terminal device 1 and the address information of the local MC system 1 to the local MC system 3. For example, the BOSS sends a packet 2-2, where a payload of the packet 2-2 is encapsulated with the MC system authentication subscription information of the terminal device 1 and the address information of the local MC system 1, and a destination address field of a packet header of the packet 2-2 is encapsulated with the address information of the local MC system 3. The local MC system 3 parses the payload of the received packet 2-2 to obtain the MC system authentication subscription information of the terminal device 1 and the address information of the local MC system 1, and the local MC system 3 can determine, based on the address information of the local MC system 1, that the MC system authentication subscription information of the terminal device 1 needs to be forwarded to the local MC system 1. For a specific forwarding process, refer to step 605.

Step 605: The local network device 3 forwards the authentication subscription information of the terminal device 1 based on the destination indication information.

The local network device 3 forwards the authentication subscription information of the terminal device 1 by using an address indicated by the destination indication information as a destination address.

For example, the local core network device 3 sends a packet 3-1, where a payload of the packet 3-1 is encapsulated with the core network authentication subscription information of the terminal device 1, and a destination address field of a packet header of the packet 3-1 is encapsulated with the address information of the local core network device 1. The packet 3-1 arrives the local core network device 1 through a connection path between the access network device 3 and the access network device 1. The local core network device 1 parses the payload of the received packet 3-1 to obtain the core network authentication subscription information of the terminal device 1, and stores the core network authentication subscription information of the terminal device 1, so that the core network authentication subscription information of the terminal device 1 is used when the terminal device 1 applies for authentication in the local core network device 1 in the future.

For example, the local core network device 3 sends a packet 3-2, where a payload of the packet 3-2 is encapsulated with the MC system authentication subscription information of the terminal device 1, and a destination address field of a packet header of the packet 3-2 is encapsulated with the address information of the local MC system 1. The packet 3-2 arrives the local MC system 1 through a connection path between the access network device 3 and the access network device 1. The local MC system 1 parses the payload of the received packet 3-2 to obtain the MC system authentication subscription information of the terminal device 1, and stores the MC system authentication subscription information of the terminal device 1, so that the MC system authentication subscription information of the terminal device 1 is used when the terminal device 1 applies for authentication in the local MC system 1 in the future.

In this embodiment, step 606 to step 610 are optional.

Step 606: The terminal device 1 is authenticated by the local network device 1.

When the terminal device 1 accesses the access network device 1, and backhaul communication of the access network device 1 is interrupted, the terminal device 1 is authenticated by the local network device 1.

In this embodiment, step 606 is optional. Step 606 is similar to step 307. For details, refer to the related descriptions in step 307. Details are not described herein again.

Step 607: The BOSS sends first indication information and the destination indication information to the local network device 3.

The first indication information indicates to delete the authentication subscription information of the terminal device 1 from the local network device 1.

Step 608: The local network device 3 forwards the first indication information based on the destination indication information.

A manner in which the BOSS forwards the first indication information is the same as a manner in which the BOSS forwards the authentication subscription information of the terminal device 1. For details, refer to the related descriptions in step 604 and step 605. Details are not described herein again.

Step 609: The local network device 1 deletes the authentication subscription information of the terminal device 1.

For example, a local core network device 2 receives the first indication information, and deletes the core network authentication subscription information of the terminal device 1 in response to the first indication information.

For example, a local MC system 2 receives the first indication information, and deletes the MC system authentication subscription information of the terminal device 1 in response to the first indication information.

Step 610: The BOSS deletes a correspondence between the terminal device 1 and the access network device 1 from the mapping table 2.

The mapping table 2 can not only reflect which access network devices have been accessed by the terminal device, but also indirectly reflect local network devices corresponding to which access network devices store authentication subscription information of the terminal device. After the BOSS indicates the local network device 2 to delete the authentication subscription information of the terminal device 1, the BOSS deletes the correspondence between the terminal device 1 and the access network device 2 in the mapping table 2.

In this embodiment, the BOSS not only maintains the correspondence (for example, the mapping table 1) between the access network device and the local network device, but also maintains the correspondence (for example, the mapping table 3) between the access network device and the adjacent access network device (or a connected access network device), so that the BOSS searches, based on the identification information of the access network device 1 and the mapping table 3, for the access network device 3 connected to the access network device 1, and then searches, based on the identification information of the access network device 3 and the mapping table 1, for the local network device 3 deployed near the access network device 3. The BOSS sends the authentication subscription information of the terminal device to the local network device 1 via the local network device 3. This helps improve reliability of synchronizing the authentication subscription information to the local network device 1 by the BOSS.

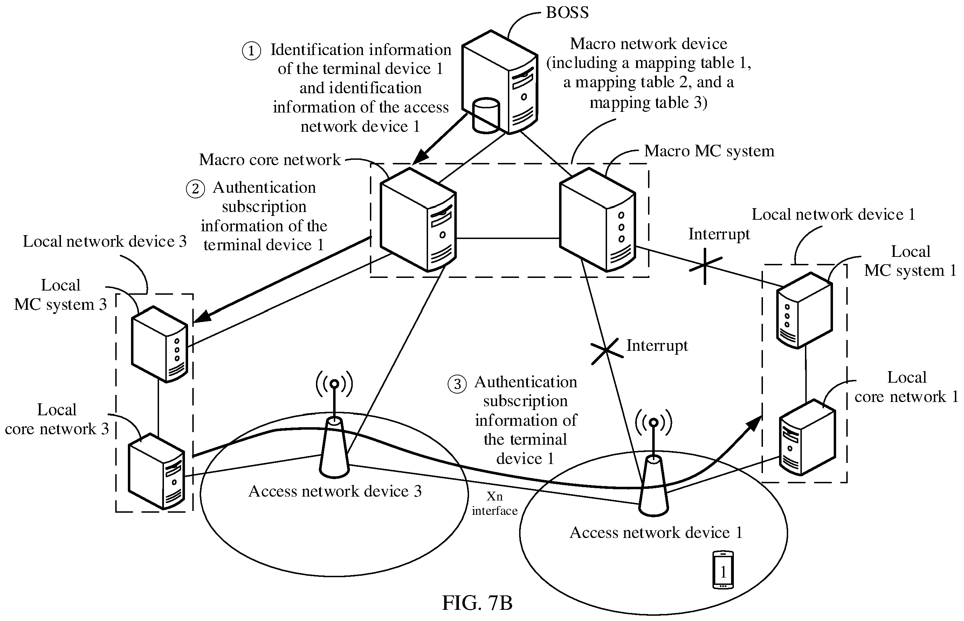

As shown in FIG. 8A to FIG. 8C and FIG. 7B, mapping tables are maintained in a macro network device. The macro network device is an example of the first network device, an access network device 1 is an example of the first access network device, a local network device 1 is an example of the second network device, an access network device 2 is an example of the third access network device that the terminal device has historically accessed, a local network device 2 is an example of the fourth network device corresponding to the third access network device, an access network device 3 is an example of the second access network device, a local network device 3 is an example of the third network device, and a terminal device 1 is an example of the terminal device. In this embodiment, each network element mainly performs the following steps.

Step 801: A BOSS sends authentication subscription information of the terminal device 1 and identification information of the access network device 1 to the macro network device.

The authentication subscription information of the terminal device 1 includes identification information of the terminal device 1. The authentication subscription information of the terminal device 1 may be generated by the BOSS, or may be manually configured. This is not limited in this application. The identification information of the access network device 1 may be manually configured in the BOSS.

Step 802: The macro network device correspondingly stores, in a mapping table 2, the identification information of the terminal device 1 and the identification information of the access network device 1.

The macro network device stores the mapping table 2, and the mapping table 2 is used to maintain a correspondence between a terminal device and an access network device accessed by the terminal device. For content included in the mapping table 2 stored by the macro network device, refer to the related descriptions in step 308. Details are not described herein again.

Step 803: The macro network device determines the local network device 1 based on the identification information of the access network device 1 and a mapping table 1.

It should be noted that there is no limitation on a time sequence between step 802 and step 803. To be specific, the macro network device may first perform step 802 and then perform step 803, the macro network device may first perform step 803 and then perform step 802, or the macro network device may perform step 802 and step 803 at the same time.

In this embodiment, step 803 is similar to step 305. For details, refer to the related descriptions in step 305. Details are not described herein again.

Step 804: When the macro network device determines that a connection path between the macro network device and the local network device 1 is interrupted, the macro network device determines, based on the mapping table 1 and a mapping table 3, the local network device 3 corresponding to the access network device 3 adjacent to the access network device 1.

Step 805: The macro network device sends the authentication subscription information of the terminal device 1 and destination indication information to the local network device 3.

Step 806: The local network device 3 forwards the authentication subscription information of the terminal device 1 based on the destination indication information.

In this embodiment, step 804 to step 806 are similar to step 603 to step 605 performed by the BOSS. For details, refer to the related descriptions in step 603 to step 605. Details are not described herein again.

In this embodiment, step 807 to step 811 are optional. In this embodiment, step 807 to step 811 are similar to step 606 to step 610 performed by the BOSS. For details, refer to the related descriptions in step 606 to step 610. Details are not described herein again.

Step 807: The terminal device 1 is authenticated by the local network device 1.

In this embodiment, step 807 is optional. Step 807 is similar to step 307. For details, refer to the related descriptions in step 307. Details are not described herein again.

Step 808: The macro network device sends first indication information and the destination indication information to the local network device 3.

Step 809: The local network device 3 forwards the first indication information based on the destination indication information.

Step 810: The local network device 1 deletes the authentication subscription information of the terminal device 1.

Step 811: The macro network device deletes a correspondence between the terminal device 1 and the access network device 1 from the mapping table 2.

In this embodiment, when a connection path between the macro network device (for example, a macro core network device and/or a macro MC system) and a local network device is interrupted, the macro network device can forward authentication subscription information of a terminal device via another local network device (for example, a network device 3). Specific steps are similar to those in the embodiment corresponding to FIG. 6A to FIG. 6C, and details are not described herein again.

In this embodiment, the macro network device not only maintains a correspondence (for example, the mapping table 1) between an access network device and a local network device, but also maintains a correspondence (for example, the mapping table 3) between an access network device and an adjacent access network device (or a connected access network device), so that the macro network device searches, based on the identification information of the access network device 1 and the mapping table 3, for the access network device 3 connected to the access network device 1, and then searches, based on the identification information of the access network device 3 and the mapping table 1, for the local network device 3 deployed near the access network device 3. The BOSS sends the authentication subscription information of the terminal device to the local network device 1 via the local network device 3. This helps improve reliability of synchronizing the authentication subscription information to the local network device 1 by the macro network device.

In correspondence to the solutions provided in the foregoing method embodiments, embodiments of this application further provide corresponding communication devices (sometimes also referred to as communication apparatus) and a communication system. The communication device includes a corresponding module or unit configured to perform each part in the foregoing embodiments. The module or unit may be software, hardware, or a combination of software and hardware. The following only briefly describes the communication device and system. For implementation details of the solutions, refer to descriptions in the foregoing method embodiments. Details are not described below.

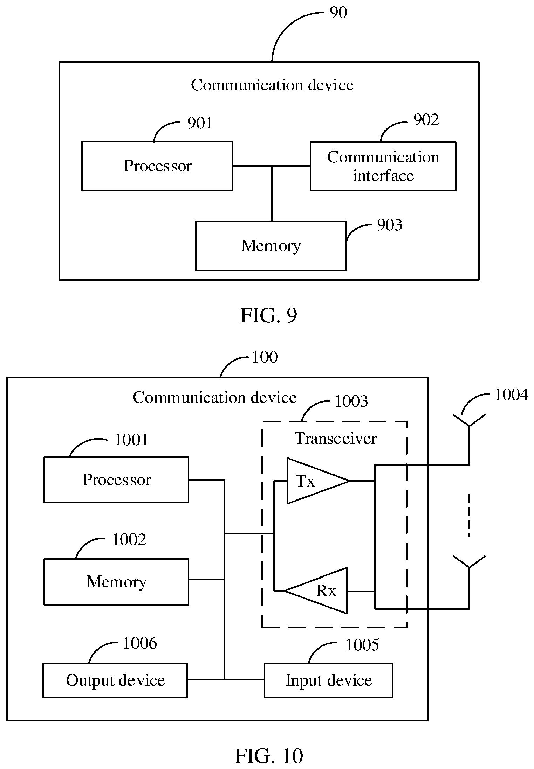

FIG. 9 is a diagram of a structure of a communication device 90 according to this application. It should be understood that the core network device (for example, the macro core network device or the local core network device) in the method embodiments corresponding to FIG. 2, FIG. 3A and FIG. 3B, FIG. 5A and FIG. 5B, FIG. 6A to FIG. 6C, or FIG. 8A to FIG. 8C may be based on the structure of the communication device 90 shown in FIG. 9 in this embodiment.

As shown in FIG. 9, the communication device 90 may include a processor 901, a memory 903, and a communication interface 902. The processor 901 is coupled to the memory 903, and the processor 901 is coupled to the communication interface 902.

The communication interface 902 is connected to another communication device through a communication link. For example, the communication interface 902 may include a network interface between the communication interface 902 and an access network device (for example, the communication device 90 shown in FIG. 9), for example, an S1 interface.

The processor 901 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 901 may be one processor, or may include a plurality of processors. This is not specifically limited herein.

In addition, the memory 903 is mainly configured to store a software program and data. The memory 903 may exist independently, and is connected to the processor 901. Optionally, the memory 903 and the processor 901 may be integrated, for example, integrated into one or more chips. The memory 903 can store program code for executing the technical solutions in embodiments of this application, and the processor 901 controls the execution. Various types of executed computer program code may also be considered as drivers of the processor 901. The memory 903 may include a volatile memory (volatile memory), for example, a random-access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 903 may alternatively include a combination of the foregoing types of memories. The memory 903 may be one memory, or may include a plurality of memories. For example, the memory 903 is configured to store various types of data. For example, the memory 903 is configured to store various correspondences (for example, a first correspondence, a second correspondence, and a third correspondence) described in the embodiment corresponding to FIG. 2. For example, the memory 903 is configured to store various mapping tables (for example, a mapping table 1, a mapping table 2, and a mapping table 3) described in the embodiment corresponding to FIG. 3A and FIG. 3B or FIG. 8A to FIG. 8C. For example, the memory 903 is configured to store authentication subscription information of a terminal device, for example, core network authentication subscription information used by the terminal device when the terminal device applies for authentication in a core network device (a macro core network device or a local core network device).

In a design, the communication device 90 is configured to perform the method of the macro core network device (namely, the first network device) in the embodiment corresponding to FIG. 2, FIG. 3A and FIG. 3B, FIG. 5A and FIG. 5B, FIG. 6A to FIG. 6C, or FIG. 8A to FIG. 8C. The communication interface 902 is configured to obtain identification information of a terminal device and identification information of a first access network device. The processor 901 is configured to determine a second network device based on the identification information of the first access network device, where the second network device is a local network device that provides, when a backhaul link is interrupted, a service for the terminal device that accesses the first access network device. The communication interface 902 is further configured to send authentication subscription information, of the terminal device, to be synchronized to the second network device, where the authentication subscription information of the terminal device is used for authenticating, by the second network device, the terminal device that accesses the first access network device.

In a possible implementation, the memory 903 stores a first correspondence, and the first correspondence indicates a correspondence between the first access network device and the second network device. The processor 901 is specifically configured to determine, based on the identification information of the first access network device and the first correspondence, the second network device corresponding to the first access network device.

In a possible implementation, when determining that a connection path between the first network device and the second network device is not interrupted, the communication interface 902 is specifically configured to send the authentication subscription information of the terminal device to the second network device.

For example, the communication interface 902 is specifically configured to send a first packet, where a destination address field of a packet header of the first packet carries address information of the second network device, and a payload field of the first packet carries the authentication subscription information of the terminal device.

In a possible implementation, when determining that a connection path between the first network device and the second network device is interrupted, the processor 901 is specifically configured to determine, a second access network device based on the identification information of the first access network device and a third network device corresponding to the second access network device, where the third network device is a local network device that provides, when the backhaul link is interrupted, a service for the terminal device that accesses the second access network device, there is a connection path between the first access network device and the second access network device, and there is a connection path between the first access network device and the second network device; and the communication interface 902 is specifically configured to send the authentication subscription information of the terminal device to the second network device via the third network device.

For example, the communication interface 902 is specifically configured to send a second packet, where a destination address field of a packet header of the second packet carries address information of the third network device, and a payload field of the second packet carries the authentication subscription information of the terminal device and address information of the second network device; and the address information of the second network device in the payload field is used by the third network device to generate a third packet to be sent to the second network device, where a destination address field of a packet header of the third packet carries the address information of the second network device, and a payload field of the third packet carries the authentication subscription information of the terminal device.

In a possible implementation, the memory 903 stores a second correspondence and a third correspondence, the second correspondence indicates a correspondence between the first access network device and the second access network device, and the third correspondence indicates a correspondence between the second access network device and the third network device; and the processor 901 is specifically configured to: determine the second access network device based on the identification information of the first access network device and the second correspondence; and determine, based on identification information of the second access network device and the third correspondence, the third network device corresponding to the second access network device.

In a possible implementation, the memory 903 stores identification information of a third access network device and address information of a fourth network device, the third access network device is an access network device that the terminal device has historically accessed, the fourth network device is a local network device that provides, when the backhaul link is interrupted, a service for the terminal device that accesses the third access network device, and the fourth network device stores the authentication subscription information of the terminal device.

The processor 901 is further configured to send first indication information to the fourth network device through the communication interface 902 when the identification information of the first access network device is different from the identification information of the third access network device, where the first indication information indicates to delete the authentication subscription information of the terminal device.

In a possible implementation, the communication interface 902 is further configured to obtain the identification information of the terminal device and identification information of a fourth access network device, where the fourth access network device is different from the first access network device; and send the first indication information to the second network device, where the first indication information indicates to delete the authentication subscription information of the terminal device.

It should be noted that for specific implementations and beneficial effect of this embodiment, refer to the method of the core network device (namely, the first network device) in the foregoing embodiment. Details are not described herein again.

In another design, the communication device 90 is configured to perform the method of the local core network device (namely, the second network device) in the embodiment corresponding to FIG. 2, FIG. 3A and FIG. 3B, FIG. 5A and FIG. 5B, FIG. 6A to FIG. 6C, or FIG. 8A to FIG. 8C. The communication interface 902 is configured to receive authentication subscription information of a terminal device, where the terminal device is a terminal device that has accessed or is to access a first access network device, and the second network device is a local network device that provides, when a backhaul link is interrupted, a service for the terminal device that accesses the first access network device; and the processor 901 is configured to authenticate, based on the authentication subscription information of the terminal device, the terminal device that applies for authentication.

In a possible implementation, the communication interface 902 is specifically configured to receive the authentication subscription information of the terminal device from a first network device, where the first network device is a network device that provides, when the backhaul link is not interrupted, a service for the terminal device that accesses the first access network device.

For example, the communication interface 902 is specifically configured to receive a first packet from the first network device, where a destination address field of a packet header of the first packet carries address information of the second network device, and a payload field of the first packet carries the authentication subscription information of the terminal device.

In a possible implementation, the communication interface 902 is specifically configured to receive, from a third network device through a connection path between the first access network device and a second access network device, the authentication subscription information of the terminal device sent by a first network device, where the first network device is a network device that provides, when the backhaul link is not interrupted, a service for the terminal device that accesses the first access network device, and the third network device is a local network device that provides, when the backhaul link is interrupted, a service for the terminal device that accesses the second access network device.

For example, the communication interface 902 is specifically configured to receive a third packet from a third network device, where a destination address field of a packet header of the third packet carries address information of the second network device, and a payload field of the third packet carries the authentication subscription information of the terminal device.

In a possible implementation, the communication interface 902 is specifically configured to receive first indication information, where the first indication information indicates to delete the authentication subscription information of the terminal device; and the processor 901 is further configured to delete the authentication subscription information of the terminal device.

It should be noted that for specific implementations and beneficial effect of this embodiment, refer to the method of the local core network device (namely, the second network device) in the foregoing embodiment. Details are not described herein again.

FIG. 10 is a diagram of a structure of another communication device 100 according to this application. It should be understood that the terminal device in the method embodiment corresponding to FIG. 2, FIG. 3A and FIG. 3B, FIG. 5A and FIG. 5B, FIG. 6A to FIG. 6C, or FIG. 8A to FIG. 8C may be based on the structure of the communication device 100 shown in FIG. 10 in this embodiment.

The communication device 100 includes at least one processor 1001, at least one memory 1002, and at least one transceiver 1003. The processor 1001, the memory 1002, and the transceiver 1003 are connected. Optionally, the communication device 100 may further include an input device 1005, an output device 1006, and one or more antennas 1004. The antenna 1004 is connected to the transceiver 1003, and the input device 1005 and the output device 1006 are connected to the processor 1001.

In this embodiment, the memory 1002 is mainly configured to store a software program and data. The memory 1002 may exist independently, and is connected to the processor 1001. Optionally, the memory 1002 and the processor 1001 may be integrated, for example, integrated into one or more chips. The memory 1002 can store program code for executing the technical solutions in embodiments of this application, and the processor 1001 controls the execution. Various types of executed computer program code may also be considered as drivers of the processor 1001. It should be understood that FIG. 10 in this embodiment shows only one memory and one processor. However, during actual application, the communication device 100 may have a plurality of processors or a plurality of memories. This is not specifically limited herein. In addition, the memory 1002 may also be referred to as a storage medium, a storage device, or the like. The memory 1002 may be a storage element on a same chip as the processor, namely, an on-chip storage element, or may be an independent storage element. This is not limited in embodiments of this application.

In this embodiment, the transceiver 1003 may be configured to support receiving or sending of a radio frequency signal between the communication device 100 and an access network device. The transceiver 1003 may be connected to the antenna 1004. The transceiver 1003 includes a transmitter Tx and a receiver Rx. Specifically, the one or more antennas 1004 may receive a radio frequency signal. The receiver Rx in the transceiver 1003 is configured to: receive the radio frequency signal from the antenna 1004, convert the radio frequency signal into a digital baseband signal or a digital intermediate frequency signal, and provide the digital baseband signal or the digital intermediate frequency signal for the processor 1001, so that the processor 1001 performs further processing, for example, demodulation processing and decoding processing, on the digital baseband signal or the digital intermediate frequency signal. In addition, the transmitter Tx in the transceiver 1003 is further configured to: receive a modulated digital baseband signal or a modulated digital intermediate frequency signal from the processor 1001, convert the modulated digital baseband signal or the modulated digital intermediate frequency signal into a radio frequency signal, and send the radio frequency signal through the one or more antennas 1004. Specifically, the receiver Rx may selectively perform one or more levels of down-mixing processing and analog-to-digital conversion processing on the radio frequency signal to obtain the digital baseband signal or the digital intermediate-frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

It should be understood that the transceiver 1003 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input port, a receiving circuit, or the like. The sending unit may be referred to as a transmitter machine, a transmitter, a transmission circuit, or the like.

The processor 1001 may be a baseband processor, or may be a central processing unit (central processing unit, CPU). The baseband processor and the CPU may be integrated together or separated from each other. The processor 1001 may be configured to implement various functions for the terminal device, for example, configured to process a communication protocol and communication data; or configured to: control the whole terminal device, execute a software program, and process data of the software program; or configured to assist in completing a computing processing task, for example, graphics and image processing or audio processing. Alternatively, the processor 1001 is configured to implement one or more of the foregoing functions.

In addition, the output device 1006 communicates with the processor 1001, and may display information in a plurality of manners. This is not specifically limited herein.

In a design, the communication device 100 is configured to perform the method of the terminal device in the embodiment corresponding to FIG. 2, FIG. 3A and FIG. 3B, FIG. 5A and FIG. 5B, FIG. 6A to FIG. 6C, or FIG. 8A to FIG. 8C. The transceiver 1003 in the communication device 100 is configured to: send identification information of the terminal device and identification information of a first access network device to a first network device via the first access network device, where the identification information of the terminal device and the identification information of the first access network device are used by the first network device to determine a second network device based on the identification information of the first access network device and synchronize authentication subscription information of the terminal device to the second network device, where the second network device is a local network device that provides, when a backhaul link is interrupted, a service for the terminal device that accesses the first access network device; and receive second indication information from the first access network device, where the second indication information indicates that the backhaul link of the first access network device is interrupted. The processor 1001 is configured to: be authenticated in the second network device, and obtain a communication service.

In a possible implementation, the transceiver 1003 is further configured to receive a system broadcast message from the first access network device, where the system broadcast message includes the identification information of the first access network device.

It should be noted that for specific implementations and beneficial effect of this embodiment, refer to the method of the terminal device in the foregoing embodiment. Details are not described herein again.

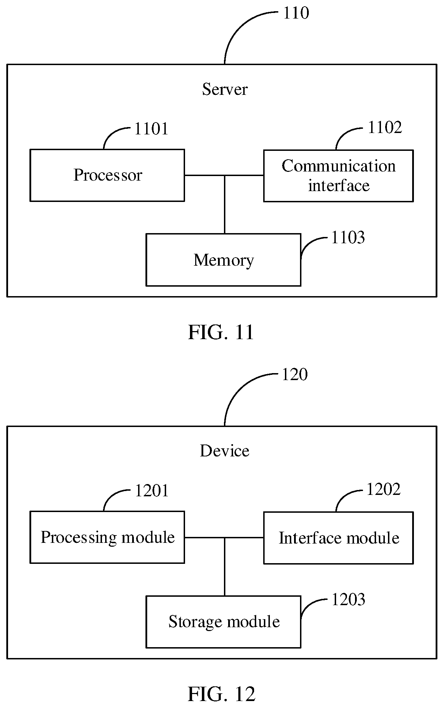

FIG. 11 is a diagram of a structure of a server 110 according to this application. It should be understood that the MC system (for example, the macro MC system or the local MC system) or the BOSS in the method embodiment corresponding to FIG. 2, FIG. 3A and FIG. 3B, FIG. 5A and FIG. 5B, FIG. 6A to FIG. 6C, or FIG. 8A to FIG. 8C may be based on the structure of the server 110 shown in FIG. 11 in this embodiment.

As shown in FIG. 11, the server 110 may include a processor 1101, a memory 1103, and a communication interface 1102. The processor 1101 is coupled to the memory 1103, and the processor 1101 is coupled to the communication interface 1102.

The communication interface 1102 is connected to another communication device through a communication link. For example, the communication interface 1102 may include a network interface between the communication interface 1102 and an access network device (for example, the server 110 shown in FIG. 11), for example, an S1 interface.

The processor 1101 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 1101 may be one processor, or may include a plurality of processors. This is not specifically limited herein.

In addition, the memory 1103 is mainly configured to store a software program and data. The memory 1103 may exist independently, and is connected to the processor 1101. Optionally, the memory 1103 and the processor 1101 may be integrated, for example, integrated into one or more chips. The memory 1103 can store program code for executing the technical solutions in embodiments of this application, and the processor 1101 controls the execution. Various types of executed computer program code may also be considered as drivers of the processor 1101. The memory 1103 may include a volatile memory (volatile memory), for example, a random-access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1103 may alternatively include a combination of the foregoing types of memories. The memory 1103 may be one memory, or may include a plurality of memories. For example, the memory 1103 is configured to store various data. For example, the memory 1103 is configured to store various correspondences (for example, a first correspondence, a second correspondence, and a third correspondence) described in the embodiment corresponding to FIG. 2. For example, the memory 1103 is configured to store various mapping tables (for example, a mapping table 1, a mapping table 2, and a mapping table 3) described in the embodiment corresponding to FIG. 3A and FIG. 3B or FIG. 8A to FIG. 8C. For example, the memory 1103 is configured to store authentication subscription information of a terminal device, for example, MC system authentication subscription information used by the terminal device when the terminal device applies for authentication in an MC system (a macro MC system or a local MC system).

In a design, the server 110 is configured to perform the method of the macro MC system (namely, the first network device) or the BOSS (namely, the first network device) in the embodiment corresponding to FIG. 2, FIG. 3A and FIG. 3B, FIG. 5A and FIG. 5B, FIG. 6A to FIG. 6C, or FIG. 8A to FIG. 8C. The communication interface 1102 is configured to obtain identification information of a terminal device and identification information of a first access network device. The processor 1101 is configured to determine a second network device based on the identification information of the first access network device, where the second network device is a local network device that provides, when a backhaul link is interrupted, a service for the terminal device that accesses the first access network device. The communication interface 1102 is further configured to send authentication subscription information, of the terminal device, to be synchronized to the second network device, where the authentication subscription information of the terminal device is used for authenticating, by the second network device, the terminal device that accesses the first access network device.

In a possible implementation, the memory 1103 stores a first correspondence, and the first correspondence indicates a correspondence between the first access network device and the second network device. The processor 1101 is specifically configured to determine, based on the identification information of the first access network device and the first correspondence, the second network device corresponding to the first access network device.

In a possible implementation, when determining that a connection path between the first network device and the second network device is not interrupted, the communication interface 1102 is specifically configured to send the authentication subscription information of the terminal device to the second network device.

For example, the communication interface 1102 is specifically configured to send a first packet, where a destination address field of a packet header of the first packet carries address information of the second network device, and a payload field of the first packet carries the authentication subscription information of the terminal device.

In a possible implementation, when determining that a connection path between the first network device and the second network device is interrupted, the processor 1101 is specifically configured to determine, a second access network device based on the identification information of the first access network device and a third network device corresponding to the second access network device, where the third network device is a local network device that provides, when the backhaul link is interrupted, a service for the terminal device that accesses the second access network device, there is a connection path between the first access network device and the second access network device, and there is a connection path between the first access network device and the second network device; and the communication interface 1102 is specifically configured to send the authentication subscription information of the terminal device to the second network device via the third network device.

For example, the communication interface 1102 is specifically configured to send a second packet, where a destination address field of a packet header of the second packet carries address information of the third network device, and a payload field of the second packet carries the authentication subscription information of the terminal device and address information of the second network device; and the address information of the second network device in the payload field is used by the third network device to generate a third packet to be sent to the second network device, where a destination address field of a packet header of the third packet carries the address information of the second network device, and a payload field of the third packet carries the authentication subscription information of the terminal device.

In a possible implementation, the memory 1103 stores a second correspondence and a third correspondence, the second correspondence indicates a correspondence between the first access network device and the second access network device, and the third correspondence indicates a correspondence between the second access network device and the third network device; and the processor 1101 is specifically configured to: determine the second access network device based on the identification information of the first access network device and the second correspondence; and determine, based on identification information of the second access network device and the third correspondence, the third network device corresponding to the second access network device.

In a possible implementation, the memory 1103 stores identification information of a third access network device and address information of a fourth network device, the third access network device is an access network device that the terminal device has historically accessed, the fourth network device is a local network device that provides, when the backhaul link is interrupted, a service for the terminal device that accesses the third access network device, and the fourth network device stores the authentication subscription information of the terminal device.

The processor 1101 is further configured to send first indication information to the fourth network device through the communication interface 1102 when the identification information of the first access network device is different from the identification information of the third access network device, where the first indication information indicates to delete the authentication subscription information of the terminal device.

In a possible implementation, the communication interface 1102 is further configured to obtain the identification information of the terminal device and identification information of a fourth access network device, where the fourth access network device is different from the first access network device; and send the first indication information to the second network device, where the first indication information indicates to delete the authentication subscription information of the terminal device.

It should be noted that for specific implementations and beneficial effect of this embodiment, refer to the method of the macro MC system (namely, the first network device) or the BOSS (namely, the first network device) in the foregoing embodiment. Details are not described herein again.

In another design, the server 110 is configured to perform the method of the local MC system (namely, the second network device) in the embodiment corresponding to FIG. 2, FIG. 3A and FIG. 3B, FIG. 5A and FIG. 5B, FIG. 6A to FIG. 6C, or FIG. 8A to FIG. 8C. The communication interface 1102 is configured to receive authentication subscription information of a terminal device, where the terminal device is a terminal device that has accessed or is to access a first access network device, and the second network device is a local network device that provides, when a backhaul link is interrupted, a service for the terminal device that accesses the first access network device; and the processor 1101 is configured to authenticate, based on the authentication subscription information of the terminal device, the terminal device that applies for authentication.

In a possible implementation, the communication interface 1102 is specifically configured to receive the authentication subscription information of the terminal device from a first network device, where the first network device is a network device that provides, when the backhaul link is not interrupted, a service for the terminal device that accesses the first access network device.

For example, the communication interface 1102 is specifically configured to receive a first packet from the first network device, where a destination address field of a packet header of the first packet carries address information of the second network device, and a payload field of the first packet carries the authentication subscription information of the terminal device.

In a possible implementation, the communication interface 1102 is specifically configured to receive, from a third network device through a connection path between the first access network device and a second access network device, the authentication subscription information of the terminal device sent by a first network device, where the first network device is a network device that provides, when the backhaul link is not interrupted, a service for the terminal device that accesses the first access network device, and the third network device is a local network device that provides, when the backhaul link is interrupted, a service for the terminal device that accesses the second access network device.

For example, the communication interface 1102 is specifically configured to receive a third packet from a third network device, where a destination address field of a packet header of the third packet carries address information of the second network device, and a payload field of the third packet carries the authentication subscription information of the terminal device.

In a possible implementation, the communication interface 1102 is specifically configured to receive first indication information, where the first indication information indicates to delete the authentication subscription information of the terminal device; and the processor 1101 is further configured to delete the authentication subscription information of the terminal device.

It should be noted that for specific implementations and beneficial effect of this embodiment, refer to the method of the local core network device (namely, the second network device) in the foregoing embodiment. Details are not described herein again.

As shown in FIG. 12, this application further provides a device 120. The device 120 may be a terminal device, a core network device, an MC system, or a BOSS, or may be a component (for example, an integrated circuit or a chip) of a terminal device, a core network device, an MC system, or a BOSS. Alternatively, the device 120 may be another communication module configured to implement the methods in the method embodiments of this application.

The device 120 may include a processing module 1201 (or referred to as a processing unit), and optionally, may further include an interface module 1202 (or referred to as a transceiver unit or a transceiver module) and a storage module 1203 (or referred to as a storage unit). The interface module 1202 is configured to implement communication with another device. The interface module 1202 may be, for example, a transceiver module or an input/output module.

In a possible design, one or more modules in FIG. 12 may be implemented by one or more processors, or may be implemented by one or more processors and memories, or may be implemented by one or more processors and transceivers, or may be implemented by one or more processors, memories, and transceivers. This is not limited in embodiments of this application. The processor, the memory, and the transceiver may be disposed separately or may be integrated.

The device 120 has a function of implementing the core network device described in embodiments of this application. For example, the device 120 includes a corresponding module, unit, or means (means) for the core network device to perform the steps related to the core network device described in embodiments of this application. The function, unit, or means (means) may be implemented by software or hardware, may be implemented by hardware executing corresponding software, or may be implemented by a combination of software and hardware. For details, refer to the corresponding descriptions in the foregoing corresponding method embodiments. For details, refer to the device 90 in the embodiment corresponding to FIG. 9.

Alternatively, the device 120 has a function of implementing the terminal device described in embodiments of this application. For example, the device 120 includes a corresponding module, unit, or means (means) for the terminal device to perform the steps related to the terminal device described in embodiments of this application. The function, unit, or means (means) may be implemented by software or hardware, may be implemented by hardware executing corresponding software, or may be implemented by a combination of software and hardware. For details, refer to the corresponding descriptions in the foregoing corresponding method embodiments. For details, refer to the device 100 in the embodiment corresponding to FIG. 10.

Alternatively, the device 120 has a function of implementing the MC system (or the BOSS) described in embodiments of this application. For example, the device 120 includes a corresponding module, unit, or means (means) for the MC system (or the BOSS) to perform the steps related to the MC system (or the BOSS) described in embodiments of this application. The function, unit, or means (means) may be implemented by software or hardware, may be implemented by hardware executing corresponding software, or may be implemented by a combination of software and hardware. For details, refer to the corresponding descriptions in the foregoing corresponding method embodiments. For details, refer to the device 110 in the embodiment corresponding to FIG. 11.

In addition, this application provides a computer program product. The computer program product includes one or more computer instructions. When the computer program instructions are loaded and executed on a computer, all or some of the procedures or functions according to embodiments of this application are generated. For example, a method related to the first network device in FIG. 2, FIG. 3A and FIG. 3B, FIG. 5A and FIG. 5B, FIG. 6A to FIG. 6C, or FIG. 8A to FIG. 8C is implemented. For another example, a method related to the terminal device in FIG. 2, FIG. 3A and FIG. 3B, FIG. 5A and FIG. 5B, FIG. 6A to FIG. 6C, or FIG. 8A to FIG. 8C is implemented. For another example, a method related to the second network device in FIG. 2, FIG. 3A and FIG. 3B, FIG. 5A and FIG. 5B, FIG. 6A to FIG. 6C, or FIG. 8A to FIG. 8C is implemented. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the first network device in FIG. 2, FIG. 3A and FIG. 3B, FIG. 5A and FIG. 5B, FIG. 6A to FIG. 6C, or FIG. 8A to FIG. 8C.

In addition, this application further provides a computer-readable storage medium. The storage medium stores a computer program, and the computer program is executed by a processor to implement the method related to the terminal device in FIG. 2, FIG. 3A and FIG. 3B, FIG. 5A and FIG. 5B, FIG. 6A to FIG. 6C, or FIG. 8A to FIG. 8C.

In addition, this application further provides a computer-readable storage medium. The storage medium stores a computer program, and the computer program is executed by a processor to implement the method related to the second network device in FIG. 2, FIG. 3A and FIG. 3B, FIG. 5A and FIG. 5B, FIG. 6A to FIG. 6C, or FIG. 8A to FIG. 8C.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

## Claims

1. An information synchronization method, comprising:
obtaining, by a first network device, identification information of a terminal device and identification information of a first access network device;
determining, by the first network device, a second network device based on the identification information of the first access network device, wherein the second network device is a local network device that provides, when a backhaul link is interrupted, a service for the terminal device that accesses the first access network device; and
sending, by the first network device, authentication subscription information, of the terminal device, to be synchronized to the second network device, wherein the authentication subscription information of the terminal device is used for authenticating, by the second network device, the terminal device that accesses the first access network device.

2. The method according to claim 1, wherein the first network device stores a first correspondence, and the first correspondence indicates a correspondence between the first access network device and the second network device; and
determining, by the first network device, the second network device based on the identification information of the first access network device comprises:
determining, by the first network device based on the identification information of the first access network device and the first correspondence, the second network device corresponding to the first access network device.

3. The method according to claim 1 or 2, wherein sending, by the first network device, the authentication subscription information, of the terminal device, to be synchronized to the second network device comprises:
sending, by the first network device, the authentication subscription information of the terminal device to the second network device if the first network device determines that a connection path between the first network device and the second network device is not interrupted.

4. The method according to claim 3, wherein sending, by the first network device, the authentication subscription information of the terminal device to the second network device comprises:
sending, by the first network device, a first packet, wherein a destination address field of a packet header of the first packet carries address information of the second network device, and a payload field of the first packet carries the authentication subscription information of the terminal device.

5. The method according to claim 1 or 2, wherein sending, by the first network device, to the second network device, the authentication subscription information, of the terminal device, to be synchronized to the second network device comprises:
if the first network device determines that a connection path between the first network device and the second network device is interrupted, determining, by the first network device, a second access network device based on the identification information of the first access network device and a third network device corresponding to the second access network device, wherein the third network device is a local network device that provides, when the backhaul link is interrupted, a service for the terminal device that accesses the second access network device, there is a connection path between the first access network device and the second access network device, and there is a connection path between the first access network device and the second network device; and
sending, by the first network device, the authentication subscription information of the terminal device to the second network device via the third network device.

6. The method according to claim 5, wherein sending, by the first network device, the authentication subscription information of the terminal device to the second network device via the third network device comprises:
sending, by the first network device, a second packet, wherein a destination address field of a packet header of the second packet carries address information of the third network device, and a payload field of the second packet carries the authentication subscription information of the terminal device and address information of the second network device; and the address information of the second network device in the payload field is used by the third network device to generate a third packet to be sent to the second network device, wherein a destination address field of a packet header of the third packet carries the address information of the second network device, and a payload field of the third packet carries the authentication subscription information of the terminal device.

7. The method according to claim 5, wherein the first network device stores a second correspondence, and the second correspondence indicates a correspondence between the first access network device and the second access network device; the first network device stores a third correspondence, and the third correspondence indicates a correspondence between the second access network device and the third network device; and
determining, by the first network device, the second access network device based on the identification information of the first access network device and the third network device corresponding to the second access network device comprises:
determining, by the first network device, the second access network device based on the identification information of the first access network device and the second correspondence; and
determining, by the first access network device based on identification information of the second access network device and the third correspondence, the third network device corresponding to the second access network device.

8. The method according to any one of claims 1 to 7, wherein the first network device stores identification information of a third access network device and address information of a fourth network device, the third access network device is an access network device that the terminal device has historically accessed, the fourth network device is a local network device that provides, when the backhaul link is interrupted, a service for the terminal device that accesses the third access network device, and the fourth network device stores the authentication subscription information of the terminal device; and
the method further comprises:
sending, by the first network device, first indication information to the fourth network device when the identification information of the first access network device is different from the identification information of the third access network device, wherein the first indication information indicates to delete the authentication subscription information of the terminal device.

9. The method according to any one of claims 1 to 8, wherein after sending, by the first network device, the authentication subscription information, of the terminal device, to be synchronized to the second network device, the method further comprises:
obtaining, by the first network device, the identification information of the terminal device and identification information of a fourth access network device, wherein the fourth access network device is different from the first access network device; and
sending, by the first network device, the first indication information to the second network device, wherein the first indication information indicates to delete the authentication subscription information of the terminal device.

10. The method according to any one of claims 1 to 9, wherein the second network device is a local core network device, and the authentication subscription information of the terminal device comprises authentication subscription information used by the terminal device in the local core network device; and/or the second network device is a local MC system, and the authentication subscription information of the terminal device comprises authentication subscription information used by the terminal device in the local MC system.

11. The method according to any one of claims 1 to 10, wherein the method further comprises:
generating, by the first network device, the authentication subscription information of the terminal device, wherein the first network device is a business & operation support system BOSS.

12. The method according to claim **11,** wherein obtaining, by the first network device, the identification information of the terminal device and the identification information of the first access network device comprises:
receiving, by the first network device, the identification information of the terminal device and the identification information of the first access network device that are manually configured.

13. The method according to any one of claims 1 to 10, wherein the method further comprises:
obtaining, by the first network device, the authentication subscription information of the terminal device from a business & operation support system BOSS, wherein the first network device is a network device that provides, when the backhaul link is not interrupted, a service for the terminal device that accesses the first access network device, the first network device is a macro core network device, and/or the first network device is a macro MC system.

14. The method according to claim 13, wherein obtaining, by the first network device, the identification information of the terminal device and the identification information of the first access network device comprises:
receiving, by the first network device, the identification information of the terminal device and the identification information of the first access network device from the terminal device via the first access network device.

15. An information synchronization method, comprising:
sending, by a terminal device, identification information of the terminal device and identification information of a first access network device to a first network device via the first access network device, wherein the identification information of the terminal device and the identification information of the first access network device are used by the first network device to determine a second network device based on the identification information of the first access network device and synchronize authentication subscription information of the terminal device to the second network device, wherein the second network device is a local network device that provides, when a backhaul link is interrupted, a service for the terminal device that accesses the first access network device;
receiving, by the terminal device, second indication information from the first access network device, wherein the second indication information indicates that the backhaul link of the first access network device is interrupted; and
being, by the terminal device, authenticated in the second network device, and obtaining a communication service.

16. The method according to claim 15, wherein the terminal device is a terminal device that has been authenticated in the first network device.

17. The method according to claim 15 or 16, wherein before sending, by the terminal device, the identification information of the terminal device and the identification information of the first access network device to the first network device via the first access network device, the method further comprises:
receiving, by the terminal device, a system broadcast message from the first access network device, wherein the system broadcast message comprises the identification information of the first access network device.

18. An information synchronization method, comprising:
receiving, by a second network device, authentication subscription information of a terminal device, wherein the terminal device is a terminal device that has accessed or is to access a first access network device, and the second network device is a local network device that provides, when a backhaul link is interrupted, a service for the terminal device that accesses the first access network device; and
authenticating, by the second network device based on the authentication subscription information of the terminal device, the terminal device that applies for authentication.

19. The method according to claim 18, wherein receiving, by the second network device, the authentication subscription information of the terminal device comprises:
receiving, by the second network device, the authentication subscription information of the terminal device from a first network device, wherein the first network device is a network device that provides, when the backhaul link is not interrupted, a service for the terminal device that accesses the first access network device.

20. The method according to claim 18 or 19, wherein receiving, by the second network device, the authentication subscription information of the terminal device comprises:
receiving, by the second network device, a first packet from the first network device, wherein a destination address field of a packet header of the first packet carries address information of the second network device, and a payload field of the first packet carries the authentication subscription information of the terminal device.

21. The method according to claim 18, wherein receiving, by the second network device, the authentication subscription information of the terminal device comprises:
receiving, by the second network device from a third network device through a connection path between the first access network device and a second access network device, the authentication subscription information of the terminal device sent by a first network device, wherein the first network device is a network device that provides, when the backhaul link is not interrupted, a service for the terminal device that accesses the first access network device, and the third network device is a local network device that provides, when the backhaul link is interrupted, a service for the terminal device that accesses the second access network device.

22. The method according to claim 18 or 19, wherein receiving, by the second network device, the authentication subscription information of the terminal device comprises:
receiving, by the second network device, a third packet from the third network device, wherein a destination address field of a packet header of the third packet carries address information of the second network device, and a payload field of the third packet carries the authentication subscription information of the terminal device.

23. The method according to any one of claims 18 to 22, wherein the method further comprises:
receiving, by the second network device, first indication information, wherein the first indication information indicates to delete the authentication subscription information of the terminal device; and
deleting, by the second network device, the authentication subscription information of the terminal device.

24. A communication device, comprising a processor and a memory, wherein
the memory stores a computer program; and
the processor invokes the computer program, so that the communication device performs the method according to any one of claims 1 to 14.

25. A communication device, comprising a processor and a memory, wherein
the memory stores a computer program; and
the processor invokes the computer program, so that the communication device performs the method according to any one of claims 15 to 17.

26. A communication device, comprising a processor and a memory, wherein
the memory stores a computer program; and
the processor invokes the computer program, so that the communication device performs the method according to any one of claims 18 to 23.

27. A computer-readable storage medium, storing instructions, wherein when the instructions are run on a computer, the computer is enabled to perform the method according to any one of claims 1 to 14, or the method according to any one of claims 15 to 17, or the method according to any one of claims 18 to 23.

28. A computer program product, wherein when a computer reads and executes the computer program product, the method according to any one of claims 1 to 14 is enabled to be performed, or the method according to any one of claims 15 to 17 is enabled to be performed, or the method according to any one of claims 18 to 23 is enabled to be performed.
